# EUROPÄISCHE PATENTSCHRIFT

(11) **EP 3 860 889 B1**
(45) Veröffentlichungstag und Bekanntmachung des Hinweises auf die Patenterteilung: **25.09.2024**
(21) Anmeldenummer: 18783425.4
(22) Anmeldetag: 03.10.2018
(51) Int. Cl.: B60T 1/10, B60L 7/10, B61H 9/06, B60M 3/06, B60T 13/58, F16D 61/00, H02K 7/18, H02P 3/18, B61C 3/02, B60T 13/66, B60T 17/22

(54) **BREMSSYSTEM FÜR EIN SCHIENENFAHRZEUG**
BRAKE SYSTEM FOR A RAIL VEHICLE
SYSTÈME DE FREINAGE POUR UN VÉHICULE FERROVIAIRE

(43) Veröffentlichungstag der Anmeldung: 11.08.2021
(73) Patentinhaber: Schweizerische Bundesbahnen SBB, 3000 Bern 65 (CH)
(72) Erfinder: VON ARX, Raphael, 3000 Bern 65 (CH); VILFROY, André, 3000 Bern 65 (CH); GROSSENBACHER, Thomas, 3000 Bern 65 (CH); NEUENSCHWANDER, Christoph, 3000 Bern 65 (CH); SIGRIST, Martin, 2503 Biel (CH); MAST, Markus, 2503 Biel (CH)
(74) Vertreter: Rentsch Partner AG
(86) Internationale Anmeldenummer: PCT/EP2018/076914
(87) Internationale Veröffentlichungsnummer: WO 2020/069737

(56) Entgegenhaltungen:
- EP-A1- 1 804 363
- EP-A2- 2 080 647
- EP-A2- 2 476 573
- WO-A1-2016/157146
- WO-A1-2017/190198
- DE-A1- 102013 207 952
- US-A1- 2006 025 902
- US-A1- 2013 184 905

## Beschreibung

### TECHNISCHES GEBIET

Die vorliegende Erfindung betrifft ein Bremssystem für ein Schienenfahrzeug, insbesondere für ein Vollbahn-Schienenfahrzeug.

### HINTERGRUND DER ERFINDUNG

Für den Betrieb von Schienenfahrzeugen, insbesondere von Schienenfahrzeugen der Vollbahn, bzw. Vollbahn-Eisenbahn, ist eine Vielzahl von Bremssystemen bekannt. Weit verbreitet sind insbesondere die seit dem 19. Jahrhundert bekannten Druckluftbremsen. Bei diesen wird ausgehend von einem üblicherweise in einem Triebfahrzeug (z.B. Lokomotive) angeordneten Druckluftgenerator (Kompressor), Trocknungsanlagen und daran angeschlossene Druckbehälter über Druckluftleitungen ein sich über einen Verbund mehrerer Schienenfahrzeuge erstreckendes Druckluftsystem aufgebaut. Druckluft dient in solchen Systemen als Energieträger und auch zur Steuerung eines Bremsvorgangs. Bei einem aktivierbaren Bremsvorgang werden aufgrund veränderter Druckluftverteilung im Bremssystem mittels pneumatisch betriebener Bremszangen (bzw. Bremssattel) Bremsklötze bzw. Bremsbeläge in Reibverbindung mit auf den Radsatzwellen der Schienenfahrzeuge angeordneten Bremsscheiben gebracht oder auch z.B. Bremsklötze in Reibverbindung mit den Laufflächen der Räder gebracht. In Folge davon findet eine Umwandlung der Rotationsenergie der Radsätze in thermische Energie statt, wodurch das Schienenfahrzeug, bzw. ein Verbund bestehend aus mehreren Schienenfahrzeugen, abgebremst wird. Diese Systeme benötigen einerseits einen relativ grossen Installationsraum in den Triebfahrzeugen sowie verbundenen Wagen und sind andererseits auch relativ wartungsintensiv. Ebenso müssen beim Rangieren besondere Vorkehrungen getroffen werden, um ein ungewolltes Bremsen zu verhindern.

Ein bedeutender Nachteil dieser konventionellen Bremssysteme besteht zudem auch darin, dass sie eine umfassende Quelle von potentiell gesundheitsbelastendem Feinstaub darstellen. Es wird geschätzt dass alleine in der Schweiz vom Schienenverkehr pro Jahr zwischen 800 und 1200 Tonnen Feinstaub emittiert wird, wobei der grösste Teil davon seinen Ursprung in Bremsabrieb findet.

Ein weiterer Nachteil solcher konventioneller pneumatischer Bremssysteme ist, dass die während der Fahrt in einem Schienenfahrzeug vorhandene kinetische Energie beim Abbremsen als grösstenteils nicht nutzbare Wärme verloren geht. Ebenso führt die Erwärmung bspw. der Bremsscheiben zu sogenanntem Bremsschwund - auch Fading genannt - was mit teilweise aufwendigen Gegenmassnahmen etwa bei der Geometrie der Bremsscheibe kompensiert werden muss, um einer Verlängerung des Bremsweges entgegenwirken zu können. All dies führt dazu, dass die bestehenden Bremssysteme einen bedeutenden Kostenfaktor im Betrieb von Schienenfahrzeugen im Bereich der Vollbahn ausmachen.

Um die kinetische Energie während einem Bremsvorgang wenigstens in eine nutzbare Form umwandeln zu können sind Triebfahrzeuge (Lokomotiven) mit sogenannte Nutzbremsen bekannt. Diese Systeme sind jeweils so ausgelegt, dass sie insbesondere bei längeren Bergabfahrten und/oder bei hohen Fahrgeschwindigkeiten elektrisch, also via Motor, abgebremst werden können, wodurch auch mit ihnen verbundene weitere Schienenfahrzeuge abgebremst werden können. Gerade bei grösseren Verbunden von Schienenfahrzeugen ist ein solches elektrisches Abbremsen durch das Triebfahrzeug in vielen Situationen jedoch nicht ausreichend, weshalb zusätzliche Bremsleistung von der konventionellen Druckluftbremse benötigt wird. Ebenso weisen diese bekannten Nutzbremssysteme für Triebfahrzeuge bei niedrigen Fahrgeschwindigkeiten meist eine nicht ausreichende Bremsleistung auf, weshalb insbesondere z.B. bei der Einfahrt in Bahnhöfe meist hauptsächlich nur Druckluftbremssysteme zum Einsatz kommen können. Dies führt gerade auch im Nahverkehr zu einer schlechten Energieeffizienz der eingesetzten Schienenfahrzeuge wie auch zu einer potentiell erhöhten Feinstaubpartikelkonzentration im Bereich der Haltestellen aufgrund der verwendeten Reibungsbremsen.

Ein weiterer Nachteil bekannter Nutzbremsen von Triebfahrzeugen, insbesondere solcher für die Vollbahn, ist, dass die in solchen Triebfahrzeugen eingesetzten Elektromotoren wesentlich leistungsfähiger dimensioniert werden müssen, als wenn sie nur zum reinen Antrieb verwendet würden. Dies erhöht einerseits die Herstellungskosten solcher Triebfahrzeuge. Andererseits weisen solche Triebfahrzeuge wegen der für Geschwindigkeitsaufnahme und Konstantfahrphasen nicht ganz optimalen Dimensionierung häufig einen niedrigen Wirkungsgrad ausserhalb der Verzögerungsphasen (Bremsphasen) auf.

Die WO2013164166 A1 wurde am 07.1 1.2013 im Namen der Siemens Aktiengesellschaft veröffentlicht und zeigt eine Bremseinheit für ein Schienenfahrzeug mit einer Zuspanneinrichtung mit zwei Bremsarmen, welche mit Reibbelägen versehen und unter Einwirkung eines Betätigungselements zur Herstellung eines Reibschlusses zwischen den Reibbelägen und einer Bremsscheibe über der Bremsscheibe zuspannbar sind. Bei Herstellung eines Reibschlusses während der Fahrt eines Schienenfahrzeugs wird aufgrund des Reibschlusses Rotationsenergie der Bremsscheibe in thermische Energie umgewandelt und dabei das Schienenfahrzeug abgebremst.

Die DE102010032516 A1 wurde am 02.02.201 2 im Namen der Knorr-Bremse für Schienenfahrzeuge GmbH veröffentlicht und zeigt eine Bremsvorrichtung eines Fahrzeugs beinhaltend eine Wirbelstromscheibenbremse mit einem drehfesten Stator und einem rotierenden Rotor. Der Rotor oder der Stator trägt eine Wirbelstrombahn und der Stator oder der Rotor trägt eine Magnetanordnung. Deren magnetische Feldlinien induzieren bei relativer Bewegung des Rotors gegenüber dem Stator in der Wirbelstrombahn Wirbelströme zur Erzeugung eines Bremsmoments. Ebenso offenbart wird eine Reibungsscheibenbremse mit wenigstens einer Bremsscheibe und mit dieser Bremsscheibe zusammen wirkenden Bremsbelägen zur Erzeugung eines Bremsreibmoments zwischen der Bremsscheibe und den Bremsbelägen. Die Erfindung sieht vor, dass der Rotor der Wirbelstromscheibenbremse durch die Bremsscheibe der Reibungsscheibenbremse gebildet wird.

EP1804363 A1, publiziert am 04.07.2007 im Namen von Landert Motoren AG, offenbart einen grossvolumigen, leistungsfähigen Achsgenerator für Eisenbahnwagen. Der Achsgenerator hat einen Rotor, der mit der Radsatzwelle drehfest verbunden ist, und ein Statorgehäuse, das gehäusefest mit dem Drehgestellrahmen verbunden ist. Der Achsgenerator ist direkt auf der Radsatzwelle angeflanscht und ist von dieser durchgriffen. Dadurch wird eine einfache und platzsparende Montage des Achsgenerators erzielt. Wesentlich ist, dass der Achsgenerator grossvolumig ist, um eine hohe Leistung bereits ab einer Umdrehung von 200 U/min zu erzielen. Auf einer Radsatzwelle können mehrere dieser Achsgeneratoren angeordnet sein.

EP2476573 A2, publiziert am 18.07.2012 im Namen von John Kinghorn, offenbart ein flexibles Energiemanagementsystem für Eisenbahnen mit variablen Zugkompositionen. Hierfür wird mindestens ein erstes Schienenfahrzeug ohne eigene Stromversorung und mindestens ein zweites regeneratives Schienenfahrzeug mit regenerativer Bremse und Speicherbatterie o.ä. für regenerativ erzeugte Energie in die Zugkomposition eingebracht. Das regenerative Schienenfahrzeug kann alternativ oder ergänzend zur übergeordneten Stromversorgung eine lokale Stromversorgung aus der regenerativ erzeugten und zwischengespeicherten elektrischen Energie für das erste Schienenfahrzeug zur Verfügung stellen.

DE102013207952 A1, publiziert am 30.10.2014 im Namen von Siemens AG offenbart eine Vorrichtung zum Betreiben zumindest eines elektrischen Verbrauchers eines Schienenfahrzeugs mit Rekuperationsenergie. Dabei wird ein erster Betriebsmodus durch eine Bremsphase des Schienenfahrzeugs und ein zweiter Betriebsmodus durch eine vorangehende Fahrtphase des Schienenfahrzeugs definiert und der Verbraucher so gesteuert, dass seine Betriebsleistung im zweiten Betriebsmodus kleiner ist als im ersten Betriebsmodus.

WO2017/190198A1, publiziert am 09.11.2017 im Namen von Bulk Ore Shuttle System Pty. Ltd., offenbart ein Zugtransportsystem mit mindestens zwei lasttragenden länglichen rippenartig-wannenförmigen Tragkörpern, die auf beabstandeten Sattel-Schienenfahrzeugen gelagert sind und in denen eine flexible Innenhülle zur Aufnahme von Transportgütern gelagert ist.

US2013/0184905 A1, publiziert am 18.07.2013 im Namen von Mitsubishi Electric Corporation, offenbart einen Zug mit Dieselmotor und elektrischem Motor. Der Dieselmotor kann über einen Generator eine Speicherbatterie in einem separaten Speicherbatterie-Schienenfahrzeug speisen. Mittels einer Diesel-Hybrid Steuerung kann der elektrische Motor beispielsweise zum Anfahren des Zugs oder zur Unterstützung des Dieselantriebs beim Beschleunigen des Zugs zugeschaltet werden. Auf diese Weise kann der Zug beim Anfahren oder Beschleunigen mit reduzierter oder ohne Dieselmotorkraft betrieben werden.

WO2016/157146 A1, publiziert am 06.10.2016 im Namen von Transnet Soc. Ltd., offenbart einen Zug mit einem Drehgestell mit einem mechanischen regenerativen Bremssystem und Energiespeicher. Das Bremssystem kann auch als Antrieb betrieben werden. Das regenerative Bremssystem kann ein Schwungrad als mechanischen Energiespeicher aufweisen, das über ein mechanisches Transmissionssystem an eine Achse des Drehgestells angekoppelt ist, z.B. über eine Antriebskette, einen Treibriemen mit Riemenscheiben oder ein Getriebe, und ggf. eine Kupplung. Das mechanische Transmissionssystem ist über eine Steuerung so ansteuerbar, dass der Zug abgebremst oder beschleunigt werden kann.

US2006/0025902 A1, publiziert am 02.02.2006 im Namen von H. J. Brown et al., offenbart einen Zug mit einem Stromversorgungsbus, in dem eine unterbrechungsfreie Stromversorgung für mindestens einen Verbraucher mittels zweier Stromquellen und mehrerer Gleichrichter sichergestellt wird.

EP2080647 A2, publiziert am 22.07.2009 im Namen von SBZ Schörling-Brock Zweiwegetechnik GmbH, offenbart eine Schienenfahreinrichtung, die vorzugsweise für den Betrieb auf Schienen und Strasse geeignet ist. Jedem Schienenlaufrad kann ein Elektromotor zugeordnet sein. Die Elektroenergieversorgung kann aus einer Verbrennungskraftmaschine und einem Generator bestehen. Der Elektromotor kann als generatorische Bremse betrieben werden, wobei die generatorisch erzeugte Bremsenergie in einem elektrischen Speichermedium, z.B. Akku, gespeichert wird. Der Elektromotor kann über ein Getriebe mit dem Schienenlaufrad gekoppelt sein.

### DARSTELLUNG DER ERFINDUNG

Es ist eine Aufgabe der Erfindung ein Bremssystem zur Verfügung zu stellen, welches wenigstens einen der aus dem Stand der Technik bekannten Nachteile bekannter Bremssysteme behebt oder reduziert. Diese Aufgabe wird durch den Gegenstand der unabhängigen Ansprüche gelöst.

Dazu wird gemäss der Erfindung bei einem Schienenfahrzeug anstelle eines auf reiner Reibungsbremse beruhenden Bremskonzepts wenigstens ein Teil der Bremsleistung von am Schienenfahrzeug angeordneten generatorischen Bremsmodulen bereitgestellt.

Ein erfindungsgemässes Bremssystem für ein Schienenfahrzeug, insbesondere für ein Vollbahn-Schienenfahrzeug, wird in der Regel für ein Schienenfahrzeug mit einer Mehrzahl N von Radsätzen verwendet. Dabei ist N eine natürliche Zahl grösser 1, wobei bevorzugt gilt N=2, 4, 8 oder 12. Eine andere Anzahl von Radsätzen ist möglich. Ein Radsatz umfasst jeweils ein erstes Rad und ein zweites Rad, die mit einer Radsatzwelle verbunden sind. Grundsätzlich ist zwar auch eine Verwendung des erfindungsgemässen Bremssystems für Schienenfahrzeuge mit Einzelradaufhängung, respektive ohne Radsatzwelle, möglich. Jedoch hat sich gerade bei der Verwendung des Bremssystems im Bereich der Vollbahn gezeigt, dass das erfindungsgemässe Bremssystem besonders kostengünstig umsetzbar und auf die jeweiligen spezifischen Anforderungen skalierbar ist - insbesondere auch wegen der vorhandenen Radsatzwellen. Erfindungsgemäss umfasst das Bremssystem wenigstens ein einer Radsatzwelle zugeordnetes generatorisches Bremsmodul, das dazu eingerichtet ist Rotationsenergie der Radsatzwelle in elektrische Energie umzuwandeln und dadurch das Schienenfahrzeug abzubremsen. Das bedeutet, dass das generatorische Bremsmodul wenigstens einen Teil der kinetischen Energie des sich in Bewegung befindlichen Schienenfahrzeugs und gegebenenfalls bei Bedarf auch wenigstens einen Teil der kinetischen Energie weiterer Schienenfahrzeuge eines mit dem betreffenden Schienenfahrzeug zusammengeschlossenen Verbundes von Schienenfahrzeugen in elektrische Energie (bzw. Leistung) umwandeln kann. Mit anderen Worten kann das generatorische Bremsmodul in einem Rekuperationsmodus betrieben werden, in dem ein Betrag an elektrischer Bremsleistung rekuperierbar ist. Bevorzugt erfolgt die Umwandlung von Rotationsenergie des Radsatzes (bzw. kinetischer Energie eines Schienenfahrzeugs) in elektrische Energie mittels elektromagnetischer Induktion. Ein besonderer Vorteil eines solchen erfindungsgemässen Bremssystems liegt darin, dass bei Verwendung eines solchen Bremssystems auf die aus dem Stand der Technik bekannten aufwändigen Pneumatiksysteme bei Bedarf komplett verzichtet werden kann. Eine besonders vorteilhafte Ausführungsform eines Bremssystems kann erzielt werden, wenn eine Ausführungsform eines generatorischen Bremsmoduls wie hierin nachfolgend beschrieben, verwendet wird.

Gemäss eine Ausführungsform der Erfindung kann ein generatorisches Bremsmodul auch als Antriebsmodul zum Antreiben eines ihm zugeordneten Radsatzes, und damit zur Erhöhung oder Beibehaltung der Geschwindigkeit wenigstens eines Schienenfahrzeugs verwendet werden. Dazu kann ein generatorisches Bremsmodul beispielsweise einen Elektromotor aufweisen, der - als Generator betrieben - Rotationsenergie des Radsatzes in elektrische Energie umzuwandeln und dadurch das Schienenfahrzeug abbremsen kann.

Bevorzugt verfügt ein generatorisches Bremsmodul über standardisierte trennbare mechanische und/oder elektrische (bzw. elektronische) Schnittstellen, welche bei Bedarf einen einfachen Austausch des generatorischen Bremsmoduls ermöglichen. Dadurch können Unterhalt und/oder Reparatur und/oder Um-/Nachrüsten (bspw. Erhöhung der Bremsleistung) eines erfindungsgemässen Bremssystems wesentlich beschleunigt und vereinfacht werden, was die Stillstandzeiten von Schienenfahrzeugen verkleinert und einen effizienteren Betrieb ermöglicht.

Gemäss einer Ausführungsform eines erfindungsgemässen Bremssystems kommt das Bremssystem bei einem Wagen zum Einsatz, d.h. das Schienenfahrzeug ist z.B. ein Personenwagen oder ein Güterwagen. Es hat sich gezeigt, dass dadurch insbesondere bei Verwendung eines Verbunds mehrerer mit einem erfindungsgemässen Bremssystem ausgestatteter Schienenfahrzeuge ein besonders vorteilhafter Betrieb bzw. eine besonders effiziente Rückgewinnung der kinetischen Energie während einem Bremsvorgang erzielt werden kann. Eine Nutzbremse eines Triebfahrzeugs kann deshalb anders dimensioniert werden, was eine kostengünstigere und auch für den Fahrbetrieb effizientere Dimensionierung des Fahrmotors eines Triebfahrzeugs ermöglicht. Bei gewissen Ausführungsformen kann so sogar ganz auf eine Nutzbremse beim Triebfahrzeug verzichtet werden.

Für gewisse Einsatzgebiete kann wenigstens einer Radsatzwelle eine Mehrzahl K generatorischer Bremsmodule zugeordnet werden. Dadurch kann die Brems- bzw. Beschleunigungsleistung bei Bedarf erhöht werden, ohne dass dafür zwingend unterschiedliche Arten generatorischer Bremsmodule notwendig werden. Dies verringert die Komponentenvielfalt und erlaubt damit einerseits die Senkung der Produktionskosten und andererseits eine Vereinfachung von Unterhalt und Wartung des Bremssystems. Ebenso kann dadurch eine Nach- bzw. Umrüstung von Schienenfahrzeugen etwa aufgrund von Umbauten oder einem neuen geographischen (insbesondere topologischen) Einsatzgebiet ermöglicht werden. Dies trifft insbesondere bei Ausführungsformen von Bremssystemen zu, welche mehrere im Wesentlichen identische generatorische Bremsmodule aufweisen. Insbesondere solche Ausführungsformen, die ausschliesslich generatorische Bremssysteme desselben Typs aufweisen. Ausführungsformen mit einer Mehrzahl K generatorischer Bremsmodule können beispielsweise bei besonders schweren Schienenfahrzeugen verwendet werden. Ebenso kann eine solche Ausführungsform beispielweise bei Schienenfahrzeugen zum Einsatz in Hochgeschwindigkeitszügen Verwendung finden. Ebenso kann eine solche Ausführungsform bei Schienenfahrzeugen eine Verwendung finden, welche beispielsweise auf Streckenverläufen mit hohen Steigungen, respektive Gefällen, zum Einsatz kommen. Dabei ist K eine natürliche Zahl grösser 1, wobei K bevorzugt ist 2, 3, oder 4 ist. Eine höhere Anzahl generatorischer Bremsmodule ist möglich. Alternativ oder in Ergänzung können gemäss bestimmten Ausführungsformen des erfindungsgemässen Bremssystems auch eine Mehrzahl K generatorischer Bremsmodule einer Radsatzwelle zugeordnet werden, wobei es sich bei den generatorischen Bremsmodulen um wenigstens zwei unterschiedliche Typen generatorischer Bremsmodule handelt. Insbesondere können sich solche Typen generatorischer Bremsmodule darin unterscheiden, dass ihre maximalen Wirkungsgrade bei unterschiedlichen Drehzahlen liegen. Durch die Verwendung solch unterschiedlicher Typen generatorischer Bremsmodule kann bei solchen Ausführungsformen eines Bremssystems - aber auch bei anderen Ausführungsformen - eine aus mechanischer und auch energetischer Sicht optimale Bremsleistung sowohl bei hohen als auch tiefen Geschwindigkeiten gewährleistet werden. Um eine hohe Bremsleistung bei unterschiedlichen Fahrgeschwindigkeiten eines Schienenfahrzeugs erhalten zu können, weist gemäss dem erfindungsgemässen Bremssystem ein Schienenfahrzeug also auch mehrere unterschiedliche generatorische Bremsmodule auf, die jeweils für eine maximale Bremsleistung bei unterschiedlichen Fahrgeschwindigkeiten ausgelegt sind. So kann z.B. ein erstes generatorisches Bremsmoduls für eine hohe Bremsleistung in einem Bereich hoher Fahrgeschwindigkeit ausgelegt sein und ein zweites generatorisches Bremsmoduls für eine hohe Bremsleistung in einem Bereich niedriger Fahrgeschwindigkeit ausgelegt sein. Bei Bedarf kann dazu wenigstens ein generatorisches Bremsmodul auch mittels eines Getriebes bzw. eine Übersetzung mit einer Radsatzwelle verbunden sein.

Ein weiterer Vorteil der Verwendung einer Mehrzahl K generatorischer Bremsmodule, die einer Radsatzwelle zugeordnet sind besteht darin, dass dadurch bei Bedarf weitere Komponenten des Bremssystems, wie sie hierin beschrieben sind (so etwa Energiespeichermodule und/oder Umrichter und/oder Gleichrichter), örtlich relativ nahe beieinander angeordnet werden können, was den Unterhalt eines solchen Systems unter bestimmten Bedingungen vereinfachen kann. Ebenso können dadurch elektrische Leiter relativ kurz gehalten werden, was eine Kostenreduktion erlaubt und Übertragungsverluste reduziert.

Gemäss einer Ausführungsform eines Bremssystems gemäss der vorliegenden Erfindung ist nur einer Anzahl M < N von Radsatzwellen eines Schienenfahrzeugs jeweils wenigstens ein generatorisches Bremsmodul zugeordnet (M sei eine natürliche Zahl und es gelte N-M>0). D.h. in solchen Ausführungsformen eines erfindungsgemässen Bremssystems ist nicht allen Radsätzen eines Schienenfahrzeugs wenigstens ein generatorisches Bremsmodul zugeordnet. Solche Ausführungsformen können bei bestimmten Arten von Schienenfahrzeugen vorteilhaft sein, um bspw. eine bestimmte Gewichtsverteilung entlang der Längsachse (im Wesentlichen parallel zur Fahrtrichtung) des Schienenfahrzeugs zu erreichen. Bei solchen Ausführungsformen eines erfindungsgemässen Bremssystems können insbesondere die Radsätze ohne zugeordnetes generatorisches Bremsmodul beispielsweise stattdessen über Scheibenbremsen (oder andere Typen konventioneller Bremsen) verfügen, insbesondere über solche mit elektromechanischer oder elektrohydraulischer Betätigung.

Gemäss einer Ausführungsform der Erfindung, werden wenigstens zwei Radsatzwellen jeweils wenigstens ein generatorisches Bremsmodul zugeordnet. Solche Ausführungsformen können vorteilhaft sein, um eine möglichst effiziente generatorische Bremsung zu erhalten. Ebenso kann bei bestimmten Arten von Schienenfahrzeugen dadurch eine besonders vorteilhafte Gewichtsverteilung entlang der Längsachse des Schienenfahrzeugs erreicht werden. Für bestimmte Arten von Schienenfahrzeugen sind allen N Radsatzwellen jeweils zwischen 1 bis K generatorische Bremsmodule zugeordnet, wobei K eine natürliche Zahl grösser 0 ist, bevorzugt ist K = 1 oder 2 oder 3 oder 4.

Die Betriebskosten sowohl eines einzelnen Schienenfahrzeugs, als auch eines Verbunds von Schienenfahrzeugen können gesenkt werden, falls im Wesentlichen alle Radsätze des Schienenfahrzeugs oder des Verbunds von Schienenfahrzeugen im Wesentlichen identische Ausführungsformen mit wenigstens einem generatorischen Bremsmodul und bevorzugt einer Scheiben- oder Feststellbremse (besonders bevorzugt mit einem elektromechanischen oder hydraulischen Aktuator) sind. Dadurch kann insbesondere der Aufwand für Reparatur und Wartung, sowie die Lagerung von Ersatzteilen wesentlich gesenkt werden.

Es ist erfindungsgemäss möglich, dass die verschiedenen Radsatzwellen eines Schienenfahrzeugs unterschiedliche Anzahl generatorischer Bremsmodule aufweisen können, wobei auch mehrere dieselbe Anzahl generatorischer Bremsmodule aufweisen können. Gemäss einer Ausführungsform der Erfindung ist das Bremssystem so ausgebildet, dass wenigstens ein in Fahrtrichtung des Schienenfahrzeugs weiter vorne angeordneter Radsatz über eine grössere Anzahl generatorischer Bremsmodule verfügt als wenigstens ein weiter hinten angeordneter Radsatz. Auf diese Weise kann eine höhere Bremsleistung bei den im Falle eines Abbremsens mit höheren Normalkraft belasteten Rädern erzeugt werden und dadurch die Gefahr eines Gleitens effizient vermieden werden, wie nachfolgend noch genauer erläutert wird.

Ein besonders effizientes Bremssystem kann erzielt werden, wenn wenigstens ein generatorisches Bremsmodul auf einer ihm zugeordneten Radsatzwelle angeordnet ist. Falls das generatorische Bremsmodul über eine Rotor-Anordnung, wie sie nachfolgend noch beschrieben wird, verfügt, so kann in einer solchen Ausführungsform die Rotationsachse der Rotor-Anordnung im Wesentlichen identisch mit der Rotationsachse der Radsatzwelle sein. In einer solchen Ausführungsform kann die Anzahl beweglicher Komponenten des erfindungsgemässen Bremssystems besonders niedrig gehalten werden. Somit kann einerseits der Aufwand für Wartung und Unterhalt des Bremssystems gesenkt und andererseits die Effizienz des Bremssystems in bestimmten Fällen maximiert werden.

Alternativ oder in Ergänzung kann wenigstens ein generatorisches Bremsmodul mittelbar mit einer ihm zugeordneten Radsatzwelle rotatorisch verbunden sein. Eine solche mittelbare Verbindung kann beispielsweise über wenigstens ein Zahnrad erfolgen, so etwa über ein Getriebe bzw. eine Übersetzung umfassend mehrere Zahnräder. Ein solches Getriebe kann bspw. ein Planetengetriebe sein. Für besondere Anwendungen kann wenigstens ein generatorisches Bremsmodul so angeordnet sein, dass die ihm zugeordnete Radsatzwelle im Wesentlichen zwischen dem generatorischen Bremsmodul und dem Bahnkörper (Trassee) liegt. Eine solche Ausführungsform kann insbesondere dann vorteilhaft sein, wenn das generatorische Bremsmodul aufgrund besonders harscher Umweltbedingungen besonders gut geschützt werden muss.

Gemäss einer Ausgestaltung des erfindungsgemässen Bremssystems ist wenigstens einer Radsatzwelle eines Schienenfahrzeugs wenigstens eine Feststellbremse zugeordnet. Somit kann eine ausreichende Rollsicherung des Schienenfahrzeugs - bzw. eines wenigstens ein mit einem erfindungsgemässen Bremssystem ausgestatteten Verbunds von Schienenfahrzeugen - gewährleistet werden.

Gemäss einer weiteren Ausgestaltung der Erfindung weist das Bremssystem wenigstens einen Radsatz mit wenigstens einer Scheibenbremse auf, welche eine auf der Radsatzwelle angeordnete Bremsscheibe umfasst. Dadurch kann bei Bedarf ein Blending zwischen wenigstens einem generatorischen Bremsmodul und wenigstens einer Scheibenbremse durchgeführt werden, wodurch ein effizientes Bremsen in unterschiedlichen Situationen ermöglicht wird. Besonders gute Ergebnisse können erzielt werden, falls die wenigstens eine Scheibenbremse auch als Feststellbremse eingesetzt werden kann. Alternativ kann auch wenigstens eine Stirnseite eines ersten und/oder zweiten Rads eines Radsatzes als Bremsscheibe dienen. Je nach Anwendungsgebiet kann alternativ oder zusätzlich zu einer Scheibenbremse auch eine andere Art von Bremsvorrichtung, insbesondere einer Reibungsbremse, verwendet werden - bspw. eine Trommelbremse oder Klotzbremse. Ebenfalls ist anstelle oder zusätzlich zu einer solchen Reibungsbremse die Verwendung weiterer Bremstypen erfindungsgemäss möglich, so etwa von Wirbelstrombremsen.

Gemäss einer Ausführungsform eines erfindungsgemässen Bremssystems verfügt die wenigstens eine Scheibenbremse (bzw. Reibungsbremse einer anderen Art) über einen elektromechanischen und/oder einen elektrohydraulischen Aktuator zum Betätigen eines mit der Bremsscheibe zusammenwirkenden Bremssattel. Ein mit einem solchen Bremssystem ausgestattetes Schienenfahrzeug kann im Wesentlichen unabhängig von einem konventionellen pneumatischen Bremssystem betrieben werden. Gemäss einer Ausführungsform der Erfindung kann die für die Betätigung eines solchen Aktuators notwendige elektrische Energie wenigstens zeitweise von einem generatorischen Bremsmodul oder - falls vorhanden - einem Energiespeichermodul bezogen werden.

Gemäss einer weiteren Ausführungsform eines erfindungsgemässen Bremssystems ist wenigstens ein generatorisches Bremsmodul im Wesentlichen auf einer Mittelebene zwischen dem ersten und dem zweiten Rad des zugeordneten Radsatzes angeordnet und mit der entsprechenden Radsatzwelle mechanisch wirkverbunden. Dadurch kann ein in Bezug auf die mechanische Belastung des Radsatzes und seiner Lagerung besonders vorteilhaftes Beschleunigen (bzw. Abbremsen und Geschwindigkeitszunahme) des Radsatzes bewirkt werden.

Alternativ oder in Ergänzung dazu kann wenigstens ein generatorisches Bremsmodul in einem ersten Abstand Ai, wobei gilt Ai>0, zu einer Mittelebene zwischen dem ersten und dem zweiten Rad des zugeordneten Radsatzes angeordnet und mit der entsprechenden Radsatzwelle mechanisch wirkverbunden sein. Eine solche Ausführungsform kann vorteilhaft sein, um mehrere generatorische Bremsmodule auf einer Radsatzwelle anzuordnen - insbesondere wenn mehrere Radsätze eines Schienenfahrzeugs über jeweils wenigstens ein generatorisches Bremsmodul verfügen sollen - wie nachfolgend noch genauer erläutert werden wird.

Gemäss einer für bestimmte Arten von Schienenfahrzeugen vorteilhafte Variante eines erfindungsgemässen Bremssystems ist die Gesamtheit aller generatorischen Bremsmodule eines Schienenfahrzeugs so angeordnet, dass bei Geradeausfahrt des Schienenfahrzeugs die Summe erster Abstände Ai der generatorischen Bremsmodule des Schienenfahrzeugs zu einer äquidistant zwischen den ersten und zweiten Rädern der N Radsätze angeordneten vertikalen Mittelebene ungefähr gleich Null ist. Auf diese Weise kann die bei einem Abbremsen und/oder einer Geschwindigkeitszunahme auf einen Bahnkörper wirkende Belastung reduziert werden. Als Referenzpunkte für die zweiten Abstände können hierbei die mittleren mechanischen Angriffspunkte der von den generatorischen Bremsmodulen auf die Radsatzwelle übertragenen Kräfte dienen.

Bei einer für gewisse Anwendungen vorteilhaften Ausführungsform eines erfindungsgemässen Bremssystems, welches über wenigstens eine Scheibenbremse verfügt, ist die Anzahl aller Scheibenbremsen so angeordnet, dass bei Geradeausfahrt des Schienenfahrzeugs die Summe zweiter Abstände Bi aller Bremsscheiben der Scheibenbremsen zu einer äquidistant zwischen den ersten und zweiten Rädern der N Radsätze angeordneten vertikalen Mittelebene ungefähr gleich Null ist. Alternativ oder in Ergänzung können auch andere Arten von Reibungsbremsen verwendet werden.

Für bestimmte Anwendungen kann das Schienenfahrzeug wenigstens ein Drehgestell aufweisen, das wenigstens zwei Radsätze umfasst, wovon wenigstens ein Radsatz ein generatorisches Bremsmodul aufweist. Bei einem solchen Bremssystems für ein wenigstens ein Drehgestell aufweisendes Schienenfahrzeug kann ein besonders effizientes Bremsen erzielt werden, wenn die Summe der dritter Abstände Ci der generatorischen Bremsmodule eines Drehgestells zu einer äquidistant zwischen den ersten und zweiten Rädern der wenigstens zwei Radsätze dieses Drehgestells angeordneten vertikalen Mittelebene ungefähr gleich Null ist. Auf diese Weise kann ein ungewolltes Verdrehen des Drehgestells während einer von den generatorischen Bremsmodulen erzeugten Abbremsung bzw. einer Geschwindigkeitszunahme vermieden werden.

Gemäss einer weiteren Ausgestaltung eines solchen Bremssystems kann wenigstens einer der Radsätze eines Drehgestells eine Bremsscheibe aufweisen, wobei die Summe der Abstände aller Bremsscheiben eines solchen Drehgestells zu einer äquidistant zwischen den ersten und zweiten Rädern der wenigstens zwei Radsätze dieses Drehgestells angeordneten vertikalen Mittelebene ungefähr gleich Null ist.

Bei Verwendung eines erfindungsgemässen Bremssystems bei einem Schienenfahrzeug mit wenigstens einem Drehgestell, kann gemäss einer Ausführungsform der Erfindung die von wenigstens einem generatorischen Bremsmodul bei Bedarf die erzeugbare elektrische Bremsleistung bei einem in Fahrtrichtung weiter vorne gelegenen Radsatz grösser als bei einem in Fahrtrichtung weiter hinten angeordneten Radsatz sein. Auf diese Weise kann das Risiko von ungewolltem Gleiten von Radsätzen während einem Bremsvorgang reduziert werden.

Gemäss einer bevorzugten Ausführungsform eines erfindungsgemässen Bremsmoduls weist wenigstens ein generatorisches Bremsmodul eine mit der zugeordneten Radsatzwelle mechanisch wirkverbundene Rotor-Anordnung auf sowie eine mit dem zugeordneten Drehgestell drehfest wirkverbundene Stator-Anordnung auf.

Eine besonders vorteilhafte Ausführung eines erfindungsgemässen Bremssystems kann erzielt werden, wenn ein solches Bremssystem eine Rückspeisungseinrichtung zur Einspeisung wenigstens eines Teils der von wenigstens einem generatorischen Bremsmodul erzeugten elektrischen Energie in eine Fahrleitung (bzw. zugehöriges Bahnstromsystem) aufweist. Eine Fahrleitung kann bespielweise eine Oberleitung sein. Alternativ oder in Ergänzung kann die Rückspeisungseinrichtung eines erfindungsgemässen Bremssystems auch so eingerichtet sein, dass wenigstens ein Teil der von wenigstens einem generatorischen Bremsmodul erzeugten elektrischen Energie wenigstens teilweise über eine zentrale Rückspeisungseinrichtung eines Verbunds von Schienenfahrzeugen in eine Fahrleitung eingespeist werden kann. Dazu können mehrere generatorische Bremsmodule eines Bremssystems eines Schienenfahrzeugs und/oder eines Verbunds von Schienenfahrzeugen elektrisch verbunden sein. Eine solche Rückspeisungseinrichtung kann beispielsweise die Rückspeisungseinrichtung einer elektrischen oder dieselelektrischen Lokomotive mit Nutzbremse sein. Ausführungsformen eines erfindungsgemässen Bremssystems mit Rückspeisungseinrichtung können also wenigstens zeitweise in der Art einer sogenannten Nutzbremse betrieben werden.

Gute Resultate können erzielt werden, falls Rückspeisungseinrichtung des Bremssystems einen Umrichter aufweist.

Eine bevorzugte Ausführungsform eines erfindungsgemässen Bremssystems verfügt über eine Leistungssteuerung, welche wenigstens einen Teil der von wenigstens einem generatorischen Bremsmodul erzeugten elektrischen Energie einem Verbraucher zur Verfügung stellen kann. Dazu kann ein erfindungsgemässes Bremssystem bevorzugt einen Umrichter und/oder Gleichrichter aufweisen. Gemäss einer Ausführungsform umfasst das erfindungsgemässe Bremssystem eine Leistungssteuerung, welche von wenigstens einem generatorischen Bremsmodul erzeugte oder falls vorhanden in einem Energiespeichermodul gespeicherte elektrische Energie einem Verbraucher zur Verfügung stellt. Verbraucher können insbesondere eine Klimaanlage (Heizung, Lüftung, Kühlung, Entfeuchtung) und/oder eine Beleuchtungseinrichtung und/oder persönliche Verbraucher von Passagieren (z.B. Netz- und Ladegeräte für persönliche elektrische Geräte wie Mobiltelefone oder tragbare Computer) und/oder eine Toilettenanlage sein. Ein Verbraucher kann im selben Schienenfahrzeug wie ein die elektrische Energie erzeugendes generatorisches Bremsmodul angeordnet sein. Alternativ oder in Ergänzung kann bei Verwendung eines mit einem erfindungsgemässen Bremssystem ausgestatteten Schienenfahrzeugs in einem Verbund auch wenigstens ein in einem anderen Schienenfahrzeug des Verbunds angeordneter (zugeordneter) Verbraucher mit elektrischer Energie versorgt werden.

Gemäss einer bevorzugten Ausführungsform eines erfindungsgemässen Bremssystems umfasst das Bremssystem wenigstens ein Energiespeichermodul zur Speicherung wenigstens eines Teils der von wenigstens einem generatorischen Bremsmodul erzeugen elektrischen Energie. Gemäss einer Ausführungsform der Erfindung ist jedem generatorischen Bremsmodul genau ein Energiespeichermodul zugeordnet. Alternativ oder in Ergänzung können wenigstens einem generatorischen Bremsmodul auch wenigstens zwei Energiespeichermodule zugeordnet sein. Eine solche Ausführungsform kann vorteilhaft sein, um etwa die Folgen im Falle eines Ausfalls eines Energiespeichermoduls reduzieren zu können. Bei einer solchen Ausführungsform eines Bremssystems können einem Energiespeichermodul insbesondere auch mehrere generatorische Bremsmodule zugeordnet werden. Ausführungsformen eines erfindungsgemässen Bremssystems mit Energiespeichermodul können also wenigstens zeitweise in der Art einer Nutzbremse auch ohne Rückspeisung in ein Bahnstromsystem betrieben werden - etwa bei einer zeitweisen Überlast in einem Bahnstromsystem. Ein Energiespeichermodul kann im/am selben Schienenfahrzeug wie ein zugeordnetes generatorisches Bremsmodul angeordnet sein. Alternativ kann ein Energiespeichermodul jedoch auch im/an einem anderen Schienenfahrzeug wie ein zugeordnetes generatorisches Bremsmodul angeordnet sein.

Bevorzugt verfügt ein Energiespeichermodul über standardisierte trennbare mechanische und/oder elektrische (bzw. elektronische) Schnittstellen, welche bei Bedarf einen einfachen Austausch des Energiespeichermoduls ermöglichen. Dadurch können Unterhalt und/oder Reparatur und/oder Um-/Nachrüsten (bspw. Erhöhung der Speicherkapazität) eines erfindungsgemässen Bremssystems wesentlich beschleunigt und vereinfacht werden, was die Stillstandzeiten von Schienenfahrzeugen verkleinert und einen effizienteren Betrieb ermöglicht.

Gemäss einer besonderen Ausführungsform der Erfindung sind jeweils die generatorischen Bremsmodule (bzw. das generatorische Bremsmodul) eines Drehgestells eines Schienenfahrzeugs einem gemeinsamen einzelnen Energiespeichermodul oder eine gemeinsamen Gruppe von Energiespeichermodulen zugeordnet. Bevorzugt wird ein solches Energiespeichermodul oder eine solche gemeinsame Gruppe von Energiespeichermodulen an demselben Drehgestell wie das zugeordnete wenigstens eine generatorische Bremsmodul angeordnet.

In einer weiteren Ausführungsform der Erfindung sind jeweils alle generatorischen Bremsmodule eines Schienenfahrzeugs einem Energiespeichermodul oder einer Gruppe von Energiespeichermodulen zugeordnet.

Alternativ oder in Ergänzung können wenigstens einzelne Schienenfahrzeuge eines Verbunds von Schienenfahrzeugen, über Energiespeichermodule mit einer grösseren Energiespeicherkapazität verfügen und wenigstens einen Teil der von generatorischen Bremsmodulen von mit dem erfindungsgemässen Bremssystem ausgerüsteten Schienenfahrzeugen erzeugten elektrischen Energie in diesen Energiespeichermodule gespeichert wird. Eine solche Ausgestaltung eines erfindungsgemässen Bremssystems kann für bestimmte Anwendungen vorteilhaft sein, da grössere Energiespeichermodule im Allgemeinen kostengünstiger herstellbar als mehrere kleinere Energiespeichermodule mit derselben Gesamtspeicherkapazität sind.

Gemäss einer bevorzugten Ausführungsform eines erfindungsgemässen Bremssystems ist das Bremssystem so eingerichtet, dass eine Verbund mehrerer Schienenfahrzeuge umfassend solche Bremssysteme ein autarkes Bremssystem bilden - d.h. dass gegebenenfalls ohne äussere Versorgung mit elektrischer Energie und/oder Druckluft (bspw. von einem Triebfahrzeug) wenigstens zeitweilig ein Betrieb des Bremssystems möglich ist.

Gute Ergebnisse können erzielt werden, wenn das Energiespeichermodul wenigstens ein Energiespeicherelement aufweist, wobei das Energiespeicherelement ausgewählt sei aus der Gruppe umfassend Batterie, Superkondensator und Schwungrad. Andere Arten von Energiespeicherelementen sind erfindungsgemäss möglich.

Das Energiespeichermodul kann bei Bedarf einen Gleichrichter und/oder einen Wechselrichter aufweisen. Dadurch kann bei Bedarf einem generatorischen Bremsmodul elektrische Energie zugeführt werden (wie nachfolgend beschrieben wird) und/oder elektrische Energie über eine Rückspeisungseinrichtung einem Bahnstromsystem zugeführt werden und/oder elektrische Energie einem Verbraucher im Schienenfahrzeug zur Verfügung gestellt werden.

Gemäss einer bevorzugten Ausführungsform eines erfindungsgemässen Bremssystems umfasst das Bremssystem eine Antriebssteuerung, welche elektrische Energie von einer Fahrleitung und/oder von wenigstens einem Energiespeichermodul an wenigstens einem generatorischen Bremsmodul zuführt, wobei das generatorische Bremsmodul als Elektromotor wirkt und die elektrische Energie in Rotationsenergie umwandelt und auf die dem wenigsten einen generatorischen Bremsmodul zugeordnete Radsatzwelle überträgt. Auf diese Weise kann das Bremssystem als Antriebssystem genutzt werden und bspw. zuvor bei einem Bremsvorgang in elektrische Energie umgewandelte kinetische Energie eines Schienenfahrzeugs zur nachfolgenden Erhöhung der Geschwindigkeit des Schienenfahrzeugs verwendet werden.

Alternativ oder in Ergänzung kann ein erfindungsgemässes Bremssystem eine Dissipationsvorrichtung umfassen, welche wenigstens einen Teil der von wenigstens einem generatorischen Bremsmodul erzeugten elektrischen Energie in thermische Energie umwandelt. Auf diese Weise können elektrische Leistungsspitzen während einem Bremsvorgang bei Bedarf geglättet werden und eine ausreichende Bremsleistung auch dann sichergestellt werden, wenn die von wenigstens einem generatorischen Bremsmodul erzeugte elektrische Energie nicht oder nicht vollständig in eine Fahrleitung und/oder ein Energiespeichermodul abgegeben werden kann.

Dies kann beispielsweise dann der Fall sein, wenn die Bremsleistung die Aufnahmekapazität einer Fahrleitung oder eines Energiespeichermoduls (bzw. einer Gruppe von Energiespeichermodule) übersteigt. Eine solche Situation kann etwa bei längeren Gefällen oder bei Notbremsungen oder bei Überkapazitäten im Bahnstromsystem auftreten. Entsprechende Ausführungsformen eines erfindungsgemässen Bremssystems Dissipationsvorrichtung können also wenigstens zeitweise in der Art einer Widerstandsbremse betrieben werden.

Die Dissipationsvorrichtung kann insbesondere einen ohmschen Lastwiderstand aufweisen, welcher die aufgenommene elektrische Leistung in thermische Energie (Wärme) umgewandelt. Ebenso kann die Dissipationsvorrichtung Mittel zur Abgabe der erzeugten thermischen Energie an die Umgebung aufweisen, insbesondere mittels Wärmeleitung und Abstrahlung elektromagnetischer Wellen, wie nachfolgend noch genauer erläutert wird. Ebenso kann die Dissipationsvorrichtung Mittel zur wenigstens kurzzeitigen Speicherung wenigstens eines Teils der erzeugten thermischen Energie aufweisen, wie nachfolgend noch genauer erläutert wird.

Gemäss einer Ausführungsform umfasst die Dissipationsvorrichtung eine thermische Masse, die wenigstens teilweise aus einem Material mit einer hohen spezifischen Wärmekapazität besteht. Die thermische Masse kann insbesondere ein Festkörper und/oder eine Flüssigkeit und/oder ein Salz mit einer sich im Bereich der zu erwartenden Betriebstemperaturen änderndem Aggregatszustand sein. Die thermische Masse kann direkt als ohmscher Widerstand wirken und/oder die thermische Masse kann thermisch mit einem ohmschen Widerstand verbunden sein, in welchem die von wenigstens einem generatorischen Bremsmodul erzeugte elektrische Energie in thermische Energie umgewandelt wird.

Gute Resultate können erzielt werden, wenn die Dissipationsvorrichtung wenigstens eine Kühlrippe aufweist. Dadurch kann thermische Energie besonders effizient abgestrahlt werden und die Bremsleistung somit vergrössert werden. Thermische Energie kann insbesondere auch an ein Kühlmedium abgegeben werden, z.B. an Umgebungsluft (Atmosphäre) oder an eine Flüssigkeit (Kühlflüssigkeit, z.B. Öl). Erfindungsgemäss kann ein Bremssystem auch Mittel zur Erhöhung der Wärmeübertragung mittels erzwungener Konvektion im Bereich einer Dissipationsvorrichtung bzw. von Rippen aufweisen, etwa fluiddynamische Massnahmen zur Umleitung der ein Schienenfahrzeug während der Fahrt umströmenden Luft. Ebenso ist die Verwendung eines Gebläses/Lüfters denkbar, so etwa eines elektrisch betriebenen Lüfters. Eine wenigstens teilweise luftgekühlte Dissipationsvorrichtung oder wenigstens Teile davon kann somit mit Lüftern versehen oder auch eigenbelüftet sein.

Gemäss einer Ausführungsform eines erfindungsgemässen Bremssystems ist wenigstens ein Teil der Dissipationsvorrichtung im Bereich des Untergestells eines Schienenfahrzeugs angeordnet. Falls das Schienenfahrzeug wenigstens ein Drehgestell aufweist, so kann eine Dissipationsvorrichtung auch bevorzugt im Bereich des Drehgestells oder direkt am Drehgestell angeordnet werden. Gemäss einer Ausführungsform der Erfindung kann wenigstens ein Teil der Dissipationsvorrichtung im Bereich eines Dachs eines Schienenfahrzeugs angeordnet werden (bzw. im Bereich der Oberseite des Schienenfahrzeugs), wodurch bei gewissen Arten von Schienenfahrzeugen eine effiziente Ableitung erwärmter Luft möglich wird.

Gemäss einer für bestimmte Arten von Schienenfahrzeugen vorteilhaften Ausgestaltung eines erfindungsgemässen Bremssystems ist wenigstens ein Teil der Dissipationsvorrichtung an oder auf einer Radsatzwelle angeordnet und mit dieser rotatorisch verbunden. Auf diese Weise kann während einem Bremsvorgang aufgrund der durch die Rotation erzeugten erzwungenen Konvention ein besserer Wärmetransfer an Umgebung erzeugt werden. Eine solche Ausführungsform kann insbesondere bei der nachträglichen Ausrüstung von Schienenfahrzeugen mit einem erfindungsgemässen Bremssystem vorteilhaft sein, da bei solchen die Radsatzwellen und umliegenden Bauteile wegen den ansonsten montierten Scheibenbremsen in den meisten Fällen bereits so eingerichtet sind, dass im Bereich der Radsatzwellen erzeugte thermische Energie keine Beschädigung des Schienenfahrzeugs bewirkt. Gemäss einer für bestimmte Schienenfahrzeuge geeigneten Ausführungsform eines erfindungsgemässen Bremssystems werden auf wenigstens einer Radsatzwelle wenigstens ein generatorisches Bremsmodul und wenigstens ein Teil einer Dissipationsvorrichtung angeordnet. Gemäss einer weiteren Ausführungsform eines erfindungsgemässen Bremssystems wird wenigstens ein generatorisches Bremsmodul auf einer ersten Radsatzwelle angeordnet und wenigstens eine mit dem generatorischen Bremsmodul wirkverbundene Dissipationsvorrichtung wird auf einer zweiten, von der ersten Radsatzwelle verschiedenen, Radsatzwelle angeordnet. Eine solche Ausführungsform kann vorteilhaft sein um generatorische Bremsmodule vor thermischer Belastung zu schützen und auch, um die Abgabe der thermischen Energie von der Dissipationsvorrichtung zu maximieren.

Gemäss einer für bestimmte Schienenfahrzeuge vorteilhaften Ausführungsform eines erfindungsgemässen Bremssystems ist wenigstens ein Teil der Dissipationsvorrichtung Teil einer Bremsscheibe einer Scheibenbremse. Dadurch kann ein höherer Grad von Funktionsintegration erzielt und gegebenenfalls Gewicht und Kosten gesenkt werden.

Gemäss einer Ausführungsform eines erfindungsgemässen Bremssystems weist wenigstens ein generatorisches Bremsmodul ein aktives Kühlsystem aufweist. Ein solches aktives Kühlsystem kann beispielsweise einen Kühlkreislauf mit einer Kühlflüssigkeit (z.B. Wasser) umfassen. Alternativ oder in Ergänzung kann ein generatorisches Bremsmodul auch ein passives Kühlsystem aufweisen, so z.B. Kühlrippen.

Gemäss einer Ausführungsform umfasst ein generatorisches Bremsmodul eine integrierte Feststellbremse und/oder eine integrierte Scheibenbremse.

In Ausführungsformen eines erfindungsgemässen Bremssystems, welche wenigstens zwei Komponenten - ausgewählt aus der Gruppe von Energiespeichermodul, Rückspeisungseinrichtung und Dissipationsvorrichtung aufweisen - kann bei Bedarf auch ein erster Teil der von wenigstens einem generatorischen Bremsmodul erzeugten elektrischen Energie in ein Energiespeichermodul und/oder gegebenenfalls ein zweiter Teil über die Rückspeisungseinrichtung in ein Bahnstromsystem eingespeist werden und/oder gegebenenfalls ein dritter Teil über eine Dissipationsvorrichtung in Wärme umgewandelt werden. Die jeweiligen Anteile eines ersten Teils, eines zweiten Teils und eines dritten Teils an der gesamthaft erzeugten elektrischen Energie werden vorteilhaft von einer lokalen oder globalen Bremssteuerung bestimmt. Die Bestimmung der jeweiligen Anteile erfolgen vorzugsweise in Abhängigkeit von der aktuellen elektrischen Leistung des generatorischen Bremsmoduls und oder der aktuellen Aufnahmefähigkeit des Bahnstromsystems (insbesondere die aktuelle Spannungshöhe im Bahnstromsystem) und/oder dem Ladestand und der Ladekapazität des Energiespeichermoduls und/oder der vom einer Dissipationsvorrichtung aktuell konsumierbaren elektrischen Leistung. Ebenso können dazu Informationen zu den aktuellen Leistungen anderer generatorischer Bremsmodule und/oder aktuelle Leistungsdaten einer möglichen Nutzbremse einer vorhandenen Lokomotive und/oder Informationen zu einem aktuellen Streckenprofil (insbesondere das Höhenprofil und die Distanz zu bevorstehenden Haltestellen).

Gemäss einer bevorzugten Ausführungsform eines erfindungsgemässen Bremssystems umfasst das Bremssystem eine in einem Schienenfahrzeug angeordnete lokale Bremssteuerung, welche die Bremsleistung der generatorischen Bremsmodule wenigstens dieses Schienenfahrzeugs überwacht und bei Abweichung von einem Sollwert die Bremsleistung der generatorischen Bremsmodule erhöht oder senkt. Eine solche Anpassung kann insbesondere durch eine Veränderung wenigstens eines an einem generatorischen Bremsmodul angeschlossenen Lastwiderstandes, z.B. durch die an ein Energiespeichermodul abgegebene elektrische Leistung und/oder Veränderung eines angeschlossenen ohmschen Widerstands einer Dissipationsvorrichtung, erfolgen. Alternativ oder in Ergänzung kann die lokale Bremssteuerung auch die Bremsleistung wenigstens einer gegebenenfalls vorhandenen Scheibenbremse und/oder wenigstens einer gegebenenfalls vorhandenen Feststellbremse anpassen. Alternativ oder in Ergänzung kann eine lokale Bremssteuerung auch die Antriebsleistung wenigstens eines als Elektromotor auftretenden generatorischen Bremsmoduls oder einer Gruppe generatorischer Bremsmodule regeln.

Ein weiterer Vorteil eines erfindungsgemässen Bremssystems besteht darin, dass ein mit einem solchen Bremssystem ausgerüstetes Schienenfahrzeug auch so ausgebildet sein kann, dass es wenigstens kurzzeitig auch selbständig Geschwindigkeit aufnehmen und abbremsen kann. Dies insbesondere dann, wenn es über ein wie hierin beschriebenes Energiespeichermodul verfügt und wenigstens ein generatorische Bremsmodul als Elektromotor zum Antrieb eines Schienenfahrzeugs mittels vom Energiespeichermodul zur Verfügung gestellter elektrischer Energie ausgebildet ist. Solche Ausführungsformen sind insbesondere im Rangierbetrieb vorteilhaft, da sie eine Vielzahl zusätzlicher Freiheitsgrade bzw. Rangierstrategien möglichen und somit sowohl eine signifikante Reduktion der Rangierdauer als auch der benötigten Rangierlokomotiven ermöglichen. Ebenso kann gegebenenfalls auf einen Ablaufberg verzichtet werden.

Gemäss einer bevorzugten Ausgestaltung eines erfindungsgemässen Bremssystems, erstreckt sich das Bremssystem über einen Verbund mehrerer Schienenfahrzeuge, wobei wenigstens zwei Schienenfahrzeuge ein generatorisches Bremsmodul wie hierin beschrieben aufweisen. Insbesondere kann sich ein erfindungsgemässes Bremssystem auf einen Verbund ausschliesslich Schienenfahrzeuge umfassend jeweils wenigstens ein generatorisches Bremsmodul erstrecken, wobei ein Verbund zusätzlich auch ein herkömmliches Triebfahrzeug wie eine Lokomotive oder ein Triebwagen umfassen kann.

Gemäss einer Ausführungsform eines erfindungsgemässen Bremssystems umfasst dieses eine globale Bremssteuerung welche die Bremsleistung und/oder die Antriebsleistung der generatorischen Bremsmodule einer Mehrzahl von mit einem erfindungsgemässen Bremssystem ausgestatteten Schienenfahrzeugen überwacht und regelt. Gemäss einer Ausführungsform eines solchen erfindungsgemässen Bremssystems kann eine globale Bremssteuerung insbesondere auch die Verteilung der von generatorischen Bremsmodulen erzeugten elektrischen Energie auf eines oder mehrere Energiespeichermodule oder eine oder mehrere Dissipationsvorrichtungen oder eine oder mehrere Rückspeisungseinrichtungen regeln. Ebenso kann eine solche globale Bremssteuerung die Verteilung der von generatorischen der an Verbraucher gelieferten Energie steuern, bzw. die an die Verbraucher abgegebene Leistung regeln, wie nachfolgend noch genauer erläutert wird. Insbesondere kann eine globale Bremssteuerung auch ein Blending zwischen wenigstens einem generatorischen Bremsmodul und wenigstens einer Scheibenbremse steuern. Die vorgängig beschriebenen Funktionen einer globalen Bremssteuerung können auch wenigstens teilweise von einer (insbesondere wie hierin beschriebenen) lokalen Bremssteuerung ausgeführt werden.

Ausserdem ist die vorliegende Erfindung auf die Bereitstellung eines generatorischen Bremsmoduls für ein wie hierin beschriebenes erfindungsgemässes Bremssystem gerichtet.

Gemäss einer bevorzugten Ausführungsform umfasst das generatorische Bremsmodul eine Stator-Anordnung und eine bezüglich der Stator-Anordnung relativ drehbare Rotor-Anordnung, welche elektrische Energie mittels elektromagnetischer Induktion erzeugen können. Dadurch können einem Schienenfahrzeug (bzw. einem Verbund bestehend aus Schienenfahrzeugen) auf einfache Weise sowohl eine generatorische Bremsleistung als auch eine elektrische Antriebsleistung zur Verfügung gestellt werden.

Gemäss einer besonders energieeffizienten Ausführungsform eines generatorischen Bremsmoduls ist die Rotor-Anordnung so ausgebildet, dass sie auf einer Radsatzwelle eines Schienenfahrzeugs angebracht werden kann. Insbesondere kann eine solche Ausführungsform eine Durchgangsöffnung zur Aufnahme einer Radsatzwelle aufweisen. Besonders energieeffiziente Ausführungsformen können erziel werden, wenn die Rotationsachse der Rotor-Anordnung in auf einer Radsatzwelle montiertem Zustand identisch mit der Rotationsachse der Radsatzwelle ist. Die Rotor-Anordnung und die Radsatzwelle können in einer solchen Ausführungsform unmittelbar rotatorisch miteinander verbindbar sein. Alternativ kann ein generatorisches Bremsmodul auch Mittel zur rotatorisch mittelbaren Verbindung mit einer Radsatzwelle aufweisen, so etwa ein Getriebe, wie z.B. ein Planetengetriebe.

Bei einer bevorzugten Ausführungsform eines generatorischen Bremsmoduls bei welcher die Rotor-Anordnung so ausgebildet ist, dass sie rotatorisch mittelbar mit einer Radsatzwelle eines Schienenfahrzeugs verbunden werden kann ist es erfindungsgemäss auch möglich die Rotor-Anordnung nicht direkt auf Radsatzwelle anzuordnen, sondern diese beispielsweise mittels Zahnrädern mit der Radsatzwelle zu verbinden.

Gemäss einer Ausführungsform umfasst ein erfindungsgemässes generatorisches Bremsmodul eine Stator-Anordnung, welche über wenigstens ein Befestigungsmittel zur Befestigung an einem Drehgestell und/oder einem Untergestell eines Schienenfahrzeugs verfügt.

Gemäss einer bevorzugten Ausführungsform eines erfindungsgemässen generatorischen Bremsmoduls umfasst dieses ein wenigstens teilweise staub- und wasserdichtes Gehäuse. Insbesondere können elektrische und/oder elektronische und/oder mechanische Teile eines generatorischen Bremsmoduls in einem solchen Gehäuse staub- und/oder wasserdicht gekapselt sein. Gemäss einer Ausführungsform eines erfindungsgemässen generatorischen Bremssystems verfügt dieses über ein wenigstens teilweise staub- und wasserdichtes Gehäuse das eine Durchgangsöffnung zur Aufnahme einer Radsatzwelle aufweist, wobei das Gehäuse mittels wenigstens einer Rotationsdichtung an die Radsatzwelle anschliesst. Solche Ausführungsformen weisen eine besonders hohe Lebensdauer auf und sind auch unter besonders harschen Umweltbedingungen zuverlässig einsetzbar. Alternativ oder in Ergänzung kann das Gehäuse auch mittels wenigstens einer Rotationsdichtung an eine wenigstens teilweise im Gehäuse angeordnete Rotor-Anordnung anschliessen.

Die vorliegende Erfindung ist auch auf einen Radsatz gerichtet, der wenigstens ein generatorisches Bremsmodul wie hierin beschrieben aufweist. Bevorzugt weist der Radsatz wenigstens eine Feststell- und/oder Scheibenbremse in einer der hierin beschriebenen Art auf.

Die vorliegende Erfindung ist auch auf ein Vollbahn-Schienenfahrzeug gerichtet, umfassend wenigstens ein Bremssystem und/oder wenigstens ein generatorisches Bremsmodul wie hierin beschrieben wird.

Die vorliegende Erfindung ist auch auf einen Radsatz für ein Vollbahn-Schienenfahrzeug umfassend wenigstens ein generatorisches Bremsmodul wie hierin beschrieben gerichtet.

Die vorliegende Erfindung ist auch auf die Bereitstellung eines Verfahrens zum Betreiben eines Schienenfahrzeugs mit einem erfindungsgemässen Bremssystem gerichtet. Gemäss einem solchen Verfahren umfasst ein Schienenfahrzeug eine Mehrzahl N von Radsätzen, wobei ein Radsatz jeweils ein erstes Rad und ein zweites Rad aufweist, die mit einer Radsatzwelle verbunden sind. Gemäss dem Verfahren umfasst das Bremssystem wenigstens ein einer Radsatzwelle zugeordnetes generatorisches Bremsmodul, das dazu eingerichtet ist Rotationsenergie der Radsatzwelle in elektrische Energie umzuwandeln und dadurch das Schienenfahrzeug abzubremsen. Gemäss dem Verfahren ist dem generatorischen Bremsmodul wenigstens ein Energiespeichermodul zur Speicherung von elektrischer Energie zugeordnet, wobei während einem Bremsvorgang eine Bremssteuerung die aktuelle elektrische Bremsleistung des generatorischen Bremsmoduls sowie die aktuelle Speicherkapazität des wenigstens einen Energiespeichermoduls ermittelt. Die Bremssteuerung führt in Abhängigkeit von der aktuellen elektrischen Bremsleistung des generatorischen Bremsmoduls und der aktuellen Speicherkapazität des wenigstens einen Energiespeichermoduls dem Energiespeichermodul einen ersten Teil der vom generatorischen Bremsmodul erzeugten elektrischen Energie zu.

Gemäss einer Variante eines solchen Verfahrens ermittelt die Bremssteuerung ausserdem die aktuelle über eine dem wenigstens einen generatorischen Bremsmodul zugeordnete Rückspeisungseinrichtung einem Bahnstromsystem zuführbare elektrischen Leistung. Die Bremssteuerung führt in Abhängigkeit davon sowie von der aktuellen elektrischen Bremsleistung des generatorischen Bremsmoduls und der aktuellen Speicherkapazität des wenigstens einen Energiespeichermoduls der Rückspeisungseinrichtung einen zweiten Teil der vom generatorischen Bremsmodul erzeugten elektrischen Energie zu.

Gemäss einer Variante eines erfindungsgemässen Verfahrens ermittelt die Bremssteuerung die aktuelle von wenigstens einer dem generatorischen Bremsmodul zugeordneten Dissipationsvorrichtung aufnehmbare elektrische Leistung. Die Bremssteuerung führt in Abhängigkeit davon sowie in Abhängigkeit von der aktuellen elektrischen Bremsleistung des generatorischen Bremsmoduls und der aktuellen Speicherkapazität des wenigstens einen Energiespeichermoduls - und falls vorhanden der aktuell dem Bahnstromsystem zuführbaren elektrischen Leistung, der wenigstens einen Dissipationsvorrichtung - einen dritten Teil der vom generatorischen Bremsmodul erzeugten elektrischen Energie zu.

Gemäss einer Ausführungsform eines erfindungsgemässen Verfahrens ermittelt die Bremssteuerung die elektrische Bremsleistung wenigstens eines, vorzugsweise aber mehrerer, generatorischer Bremsmodule und verändert bei einem Abfallen der elektrischen Bremsleistung eines generatorischen Bremsmoduls den diesem zugeordneten Verbraucherwiderstand. Auf diese Weise kann auf relativ einfache Weise ein ungewolltes Blockieren von Rädern und folgendes Gleiten auf dem Gleis während einem Bremsvorgang verhindert werden. Eine solche Variante eines Verfahrens ist insbesondere vorteilhaft, wenn auf einer Radsatzwelle sowohl generatorische Bremsmodule als auch Reibungsbremsen (wie z.B. Scheibenbremsen) und/oder Wirbelstrombremsen angeordnet sind. Alternativ oder in Ergänzung kann die Bremssteuerung auch die von dem wenigstens einen generatorischen Bremsmodul erzeugte elektrische Frequenz und/oder Spannung bzw. Amplitude ermitteln bzw. überwachen.

Gemäss einer Variante eines erfindungsgemässen Verfahrens regelt die Bremssteuerung die Bremsleistung mehrerer generatorischer Bremsmodule derart, dass die Bremsleistung wenigstens eines in Fahrtrichtung des Schienenfahrzeugs oder einer Komposition von Schienenfahrzeugen örtlich weiter vorne angeordneten generatorischer Bremsmoduls höher ist als die wenigstens eines weiter hinten angeordneten generatorischen Bremsmoduls. Auf diese Weise kann in gewissen Situationen ein Gleiten von Rädern auf dem Gleis während dem Bremsvorgang vermieden werden.22

Anhand der in den nachfolgenden Figuren gezeigten Ausführungsbeispielen und der dazugehörigen Beschreibung werden Aspekte der Erfindung näher erläutert. Es zeigen schematisch:
- Fig. 1: ein Schienenfahrzeug mit einer Variante eines erfindungsgemässen Bremssystems in einer perspektivischen Ansicht von oben;
- Fig. 2: eine erste Ausführungsform eines Radsatzes für ein erfindungsgemässes Bremssystem in einer perspektivischen Ansicht von oben;
- Fig. 3: eine weitere Ausführungsform eines Radsatzes für ein erfindungsgemässes Bremssystem in einer perspektivischen Ansicht von oben;
- Fig. 4: eine weitere Ausführungsform eines Radsatzes für ein erfindungsgemässes Bremssystem in einer perspektivischen Ansicht von oben;
- Fig. 5: ein Schienenfahrzeug mit einem erfindungsgemässen Bremssystem in einer Seitenansicht;
- Fig. 6: ein Schienenfahrzeug mit einem erfindungsgemässen Bremssystem in einer Unteransicht;
- Fig. 7: ein Verbund zweier Schienenfahrzeuge mit erfindungsgemässen Bremssystemen in einer Seitenansicht;
- Fig. 8: eine weitere Ausführungsform eines Radsatzes für ein erfindungsgemässes Bremssystem in einer perspektivischen Ansicht von oben.

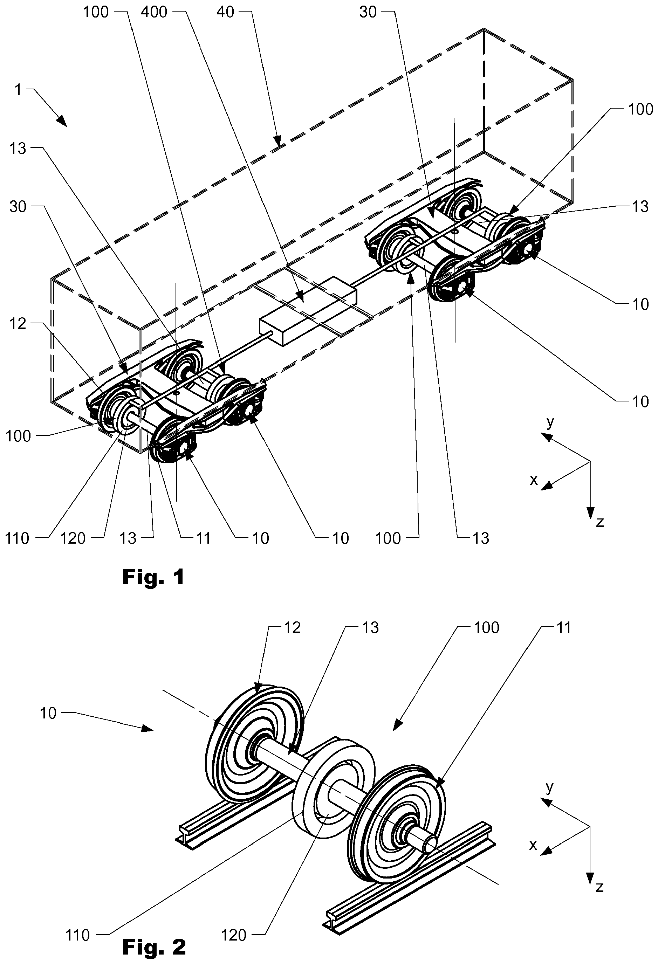

**Figur 1** zeigt schematisch ein Schienenfahrzeug 40, beispielsweise ein Vollbahn-Passagierwagen, welcher mit einer möglichen Ausführungsform eines erfindungsgemässen Bremssystems 1 ausgestattet ist. Das Schienenfahrzeug 40 umfasst zwei Drehgestelle 30, auf welchen jeweils zwei Radsätze 10 montiert sind. Die Radsätze umfassen jeweils ein erstes Rad 11 und ein zweites Rad 12, die mit einer Radsatzwelle 13 verbunden sind. Auf den vier Radsatzwelle 13 sind jeweils generatorische Bremsmodule 100 angeordnet, welche bei Bedarf Rotationsenergie der Radsatzwellen 13 in elektrische Energie umwandeln, was zu ein Abbremsen des Schienenfahrzeug 40 bewirkt. Die schematisch dargestellten generatorischen Bremsmodule 100 verfügen jeweils über eine Stator-Anordnung 110sowie eine mit der zugeordneten Radsatzwelle 13 drehfest (rotatorisch) wirkverbundene Rotor-Anordnung 120. Die Stator-Anordnungen 110 sind jeweils mit den ihnen zugeordneten Drehgestellen 30 mechanisch wirkverbunden (nicht im Detail gezeigt).

Die in **Figur 1** gezeigte Ausführungsform eines erfindungsgemässen Bremssystems 1 umfasst ausserdem ein, im Bereich des Untergestells des Schienenfahrzeugs 40 angeordnetes, Energiespeichermodul 400. Dieses ist mit den generatorischen Bremsmodulen 100 elektrisch verbunden und umfasst mehrere Batteriezellen (nicht dargestellt). Das Energiespeichermodul 400 ist so eingerichtet, dass wenigstens ein Teil der während einem Bremsvorgang von den generatorischen Bremsmodulen 100 generierten elektrischen Energie darin gespeichert werden kann. Die dargestellte Ausführungsform eines erfindungsgemässen Bremssystems 1 weist ausserdem eine Antriebssteuerung auf (nicht explizit gezeigt), welche im Energiespeichermodul 400 gespeicherte elektrische Energie wieder den generatorischen Bremsmodulen 100 zuführen kann. Die generatorische Bremsmodule 100 können in einem solchen Betriebszustand als Elektromotoren wirken und die elektrische Energie in Rotationsenergie umwandeln, welche auf die ihnen jeweils zugeordneten Radsatzwellen 13 übertragen werden. Auf diese Weise kann die zuvor während einem Bremsvorgang in elektrische Energie umgewandelte kinetische Energie des Schienenfahrzeugs 40 wenigstens teilweise zur erneuten Geschwindigkeitszunahme des Schienenfahrzeugs 40 verwendet werden.

**Figur 2** bis **Figur 4** zeigen schematisch jeweils unterschiedliche Ausführungsformen von Radsätzen 10 für ein Schienenfahrzeug mit erfindungsgemäss auf der Radsatzwelle 13 angeordneten generatorischen Bremsmodulen 100.

Wie in **Figur 2** gezeigt kann gemäss einer ersten Ausführungsform ein einzelnes generatorisches Bremsmodul 100 einem Radsatz zugeordnet werden. In der gezeigten Ausführungsform weist das generatorische Bremsmodul eine Durchgangsöffnung zur Aufnahme der Radsatzwelle 13 auf. Diese ist so angeordnet, dass die Rotationsachse der vorhandenen Rotor-Anordnung 120 bei auf der Radsatzwelle 13 montiertem Zustand identisch mit der Rotationsachse der Radsatzwelle 13. Auf diese Weise ist eine besonders effiziente Kraftübertragung zwischen der Rotor-Anordnung 120 und der Radsatzwelle 13 möglich.

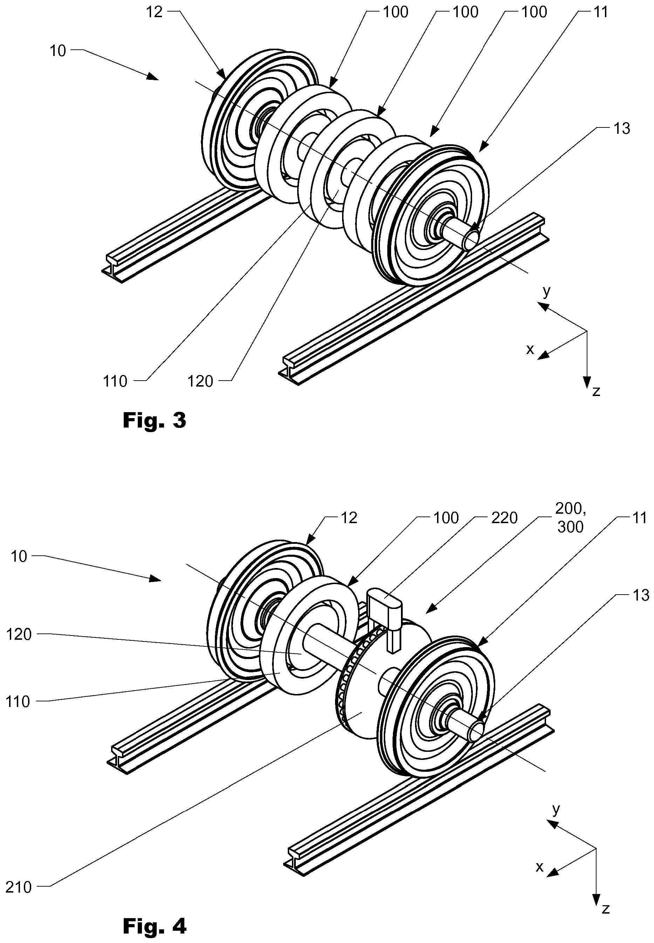

Wie in **Figur 3** gezeigt, können erfindungsgemäss auf einer Radsatzwelle 13 auch mehrere - hier drei - generatorische Bremsmodule 100 angeordnet werden. Dies kann insbesondere dann vorteilhaft sein, wenn hohe Brems- oder Antriebsleistungen erforderlich sind.

**Figur 4** zeigt eine weitere Variante eines Radsatzes 10, bei welchem erfindungsgemäss ein generatorisches Bremsmodul 100 sowie parallel dazu eine Scheibenbremse 200 auf derselben Radsatzwelle 13 angeordnet sind. Die Scheibenbremse 200 umfasst eine auf der Radsatzwelle angeordnete Bremsscheibe 210 sowie eine z.B. an einem Drehgestell (nicht dargestellt) eines Schienenfahrzeugs befestigbare Bremszange 220. Die Scheibenbremse 200 dient dazu bei besonderen Betriebszuständen eines Schienenfahrzeugs, alternativ oder zusätzlich zum generatorischen Bremsmodul 100, eine bestimmte Bremsleistung über Reibung zur Verfügung zu stellen. Solche besondere Betriebszustände können beispielsweise Notbremsungen oder sehr langsame Fahrgeschwindigkeiten sein. Bei der in **Figur 4** schematischen dargestellten Ausführungsform dient die Scheibenbremse 200 zudem gleichzeitig als Feststellbremse 300.

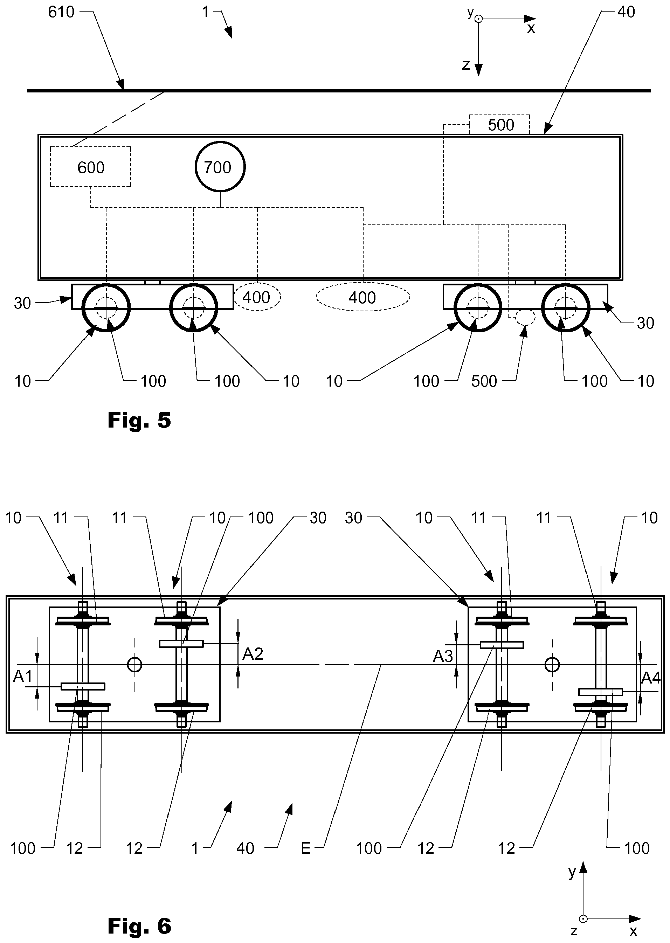

**Figur 5** zeigt schematisch ein Schienenfahrzeug 40 mit einer weiteren Ausführungsform eines erfindungsgemässen Bremssystems 1. Das Bremssystem 1 umfasst vier generatorische Bremsmodule 100, welche jeweils an den Radsätzen 10 des Schienenfahrzeugs 40 angeordnet sind. Die generatorischen Bremsmodule 100 sind wiederum mit insgesamt zwei Energiespeichermodulen 400 verbunden. Das in der Figur auf der linken Seite gezeigte erste Energiespeichermodul 400 ist am linken Drehgestell 30 angeordnet. Das zweite Energiespeichermodul 400 ist im Bereich des Untergestells des Schienenfahrzeugs 40 angeordnet. Ausserdem verfügt die dargestellte Variante eine erfindungsgemässen Bremssystems 1 über zwei Dissipationsvorrichtungen 500, um wenigstens einen Teil der von den generatorischen Bremsmodulen 100 erzeugten elektrischen Energie in thermische Energie umwandeln zu können, falls die erzeugte elektrische Leistung von den Energiespeichermodulen 400 nicht hinreichend abgenommen werden kann. Eine erste Dissipationsvorrichtung 500 ist dazu am auf der rechten Seite abgebildeten Drehlager 30 angebracht, wodurch elektrische Energie räumlich relativ nahe zum Ort ihrer Erzeugung in Wärme umgewandelt werden kann und somit die Übertragung hoher elektrischer Ströme in der Nähe von Passagieren weitgehend reduziert werden kann. Eine zweite Dissipationsvorrichtung 500 ist auf der Oberseite des Schienenfahrzeugs 500 angebracht, wodurch bei Bedarf eine effektive Wärmeübertragung an die umströmende Luft während der Fahrt und auch bei Stillstand des Schienenfahrzeugs 40 gewährleistet werden kann. Ausserdem verfügt das gezeigt Bremssystem 1 über eine Rückspeisungseinrichtung 600 zur Einspeisung wenigstens eines Teils der von den generatorischen Bremsmodulen 100 erzeugten elektrischen Energie in eine Fahrleitung 610. Ebenfalls ist das erfindungsgemässe Bremssystem so ausgestaltet, dass mittels einer Leistungssteuerung (nicht separat dargestellt), ein Teil der von den generatorischen Bremsmodulen 100 erzeugten elektrischen Energie direkt oder indirekt aus einem oder beiden Energiespeichermodulen 400 einem Verbraucher 700 (hier eine Klimaanlage) zur Verfügung gestellt werden kann.

**Figur 6** zeigt eine Variante einer erfindungsgemässen Anordnung generatorischer Bremsmodule 100 an vier Radsätzen 10. Die generatorischen Bremsmodule 100 sind dabei jeweils in einem ersten Abstand A1, A2, A3 und A4 zu einer vertikalen Mittelebene E (parallel zur Ebene z/x) zwischen den ersten und dem zweiten Rädern 11, 12 der ihnen zugeordneten Radsätze 10 angeordnet und mit den entsprechenden Radsatzwelle 13 mechanisch wirkverbunden. Dabei sind die Abstände so gewählt, dass bei einer wie gezeigten Geradeausfahrt des Schienenfahrzeugs 40 die Summe erster Abstände A1,A2,A3 und A4 zu vertikalen Mittelebene E ungefähr gleich Null. Auf diese Weise kann ein mechanisch vorteilhaftes Bremsen gewährleistet werden.

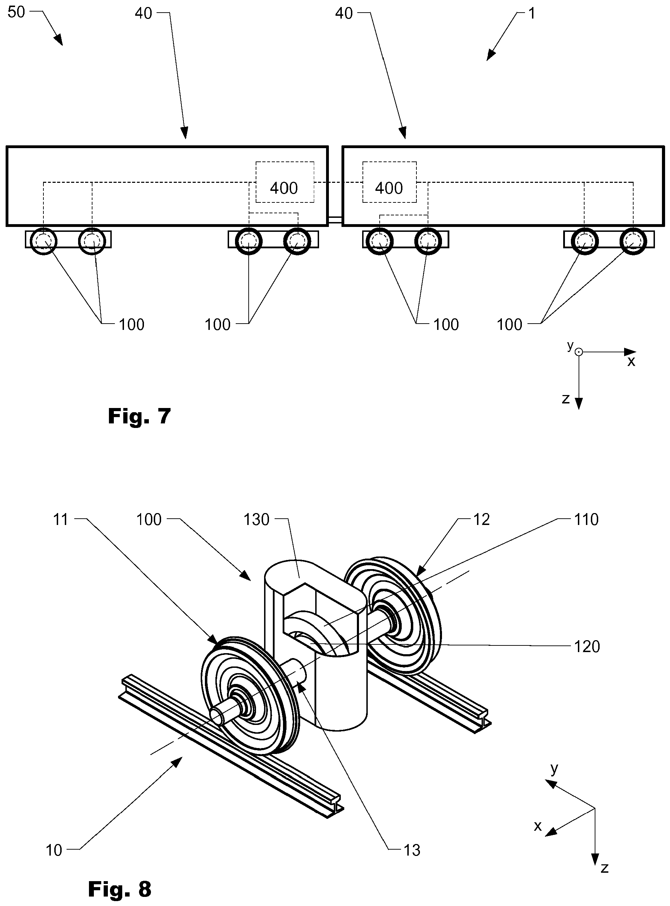

**Figur 7** zeigt einen Verbund 50 bestehend aus zwei Schienenfahrzeugen 40, wobei sich das Bremssystem 1 auf über beide Schienenfahrzeuge 40 des Verbunds 50 erstreckt. In beiden Schienenfahrzeugen 40 des Verbunds 50 ist jeweils ein Energiespeichermodul 400 angeordnet, welche gemeinsam eine Gruppe von Energiespeichermodulen 400 bilden, der bei Bedarf von jedem der acht generatorischen Bremsmodule 100 elektrische Energie zugeführt werden kann.

**Figur 8** zeigt eine Ausführungsform eines erfindungsgemässen generatorischen Bremsmoduls 100 das ein staub- und wasserdichtes Gehäuse 130 aufweist.

### LISTE DER BEZUGSZEICHEN

- 1: Bremssystem
- 10: Radsatz
- 11: Erstes Rad
- 12: Zweites Rad
- 13: Radsatzwelle
- 30: Drehgestell
- 40: Schienenfahrzeug
- 50: Verbund (Komposition)
- 100: Generatorisches Bremsmodul
- 110: Stator-Anordnung
- 120: Rotor-Anordnung
- 130: Gehäuse
- 200: Scheibenbremse
- 210: Bremsscheibe
- 220: Bremszange
- 300: Feststellbremse
- 400: Energiespeichermodul
- 500: Dissipationsvorrichtung
- 600: Rückspeisungseinrichtung
- 610: Fahrleitung
- 700: Verbraucher
- Ai: Erster Abstand (generatorisches Bremsmodul zu Mittelebene des zugehörigen Radsatzes)
- E: Mittelebene

## Patentansprüche

1. Ein Bremssystem (1) für ein Schienenfahrzeug, insbesondere für ein Vollbahn-Schienenfahrzeug (40),
a. das Schienenfahrzeug (40) umfassend eine Mehrzahl N von Radsätzen (10),
i. ein Radsatz (10) jeweils umfassend ein erstes Rad (11) und ein zweites Rad (12), die mit einer Radsatzwelle (13) verbunden sind,
b. das Bremssystem (1) umfassend wenigstens ein einer Radsatzwelle (13) zugeordnetes generatorisches Bremsmodul (100), das dazu eingerichtet ist Rotationsenergie der Radsatzwelle (13) in elektrische Energie umzuwandeln und dadurch das Schienenfahrzeug (40) abzubremsen, **dadurch gekennzeichnet, dass**
c. das Bremssystem mehrere unterschiedliche generatorische Bremsmodule aufweist, die jeweils für eine maximale Bremsleistung bei unterschiedlichen Fahrgeschwindigkeiten ausgelegt sind.

2. Das Bremssystem (1) gemäss Anspruch 1, **dadurch gekennzeichnet, dass** ein erstes generatorisches Bremsmodul für eine hohe Bremsleistung in einem Bereich hoher Fahrgeschwindigkeit ausgelegt ist und ein zweites generatorisches Bremsmodul für eine hohe Bremsleistung in einem Bereich niedriger Fahrgeschwindigkeit ausgelegt ist.

3. Das Bremssystem (1) gemäss Anspruch 2, **dadurch gekennzeichnet, dass** dazu wenigstens ein generatorisches Bremsmodul auch mittels eines Getriebes oder einer Übersetzung mit der Radsatzwelle verbunden ist.

4. Das Bremssystem (1) gemäss einem der vorangehenden Ansprüche, **dadurch gekennzeichnet, dass** das Schienenfahrzeug (40) ein Wagen, bevorzugt ein Personenwagen oder ein Güterwagen ist.

5. Das Bremssystem (1) gemäss einem der vorangehenden Ansprüche, **dadurch gekennzeichnet, dass** wenigstens einer Radsatzwelle (13) eine Mehrzahl K generatorischer Bremsmodule (100) zugeordnet ist, und dass die generatorischen Bremsmodule (100) wenigstens zwei unterschiedliche Typen generatorischer Bremsmodule (100) sind.

6. Das Bremssystem (1) gemäss Anspruch 5, **dadurch gekennzeichnet, dass** sich die Typen generatorischer Bremsmodule darin unterscheiden, dass ihre maximalen Wirkungsgrade bei unterschiedlichen Drehzahlen liegen.

7. Das Bremssystem (1) gemäss einem der vorangehenden Ansprüche, **dadurch gekennzeichnet, dass** wenigstens ein weiter vorne angeordneter Radsatz über eine grössere Anzahl generatorischer Bremsmodule verfügt als wenigstens ein weiter hinten angeordneter Radsatz.

8. Das Bremssystem (1) gemäss einem der vorangehenden Ansprüche, **dadurch gekennzeichnet, dass** wenigstens ein Radsatz (10) wenigstens eine Scheibenbremse (200) mit einer auf der Radsatzwelle (13) angeordneten Bremsscheibe (210) umfasst, insbesondere dass die wenigstens eine Scheibenbremse (200) einen elektromechanischen und/oder einen hydraulischen Aktuator (225) zum Betätigen eines Bremssattels (220) aufweist.

9. Das Bremssystem (1) gemäss einem der vorangehenden Ansprüche, **dadurch gekennzeichnet, dass** wenigstens ein generatorisches Bremsmodul (100) im Wesentlichen auf einer Mittelebene (E) zwischen dem ersten und dem zweiten Rad (11, 12) des zugeordneten Radsatzes (10) angeordnet und mit der entsprechenden Radsatzwelle (13) mechanisch wirkverbunden ist.

10. Das Bremssystem (1) gemäss einem der vorangehenden Ansprüche, **dadurch gekennzeichnet, dass** wenigstens ein generatorisches Bremsmodul (100) in einem ersten Abstand Ai, wobei gilt Ai>0, zu einer Mittelebene (E) zwischen dem ersten und dem zweiten Rad (11, 12) des zugeordneten Radsatzes (10) angeordnet und mit der entsprechenden Radsatzwelle (13) mechanisch wirkverbunden ist, insbesondere dass bei Geradeausfahrt des Schienenfahrzeugs (40) die Summe erster Abstände (Ai) aller generatorischen Bremsmodule (100) des Schienenfahrzeugs (40) zu einer äquidistant zwischen den ersten und zweiten Rädern (11, 12) der N Radsätze (10) angeordneten vertikalen Mittelebene (E) ungefähr gleich Null ist.

11. Das Bremssystem (1) gemäss einem der vorangehenden Ansprüche, **dadurch gekennzeichnet, dass** das Schienenfahrzeug (40) wenigstens ein Drehgestell (30) umfassend wenigstens zwei Radsätze (10) aufweist, wovon wenigstens ein Radsatz (10) ein generatorisches Bremsmodul (100) aufweist, insbesondere dass wenigstens ein generatorisches Bremsmodul (100) eine mit der ihm zugeordneten Radsatzwelle (13) mechanisch wirkverbundene Rotor-Anordnung (120) sowie eine mit dem ihm zugeordneten Drehgestell (300) drehfest wirkverbundene Stator-Anordnung (120) aufweist.

12. Das Bremssystem (1) gemäss einem der vorangehenden Ansprüche, **dadurch gekennzeichnet, dass** es eine Rückspeisungseinrichtung (600) zur Einspeisung wenigstens eines Teils der von wenigstens einem generatorischen Bremsmodul (100) erzeugten elektrischen Energie in eine Fahrleitung (610) aufweist.

13. Das Bremssystem (1) gemäss einem der vorangehenden Ansprüche, **dadurch gekennzeichnet, dass** es eine Leistungssteuerung umfasst, welche wenigstens einen Teil der von wenigstens einem generatorischen Bremsmodul (100) erzeugten elektrischen Energie einem elektrischen Verbraucher (700) zur Verfügung stellt.

14. Das Bremssystem (1) gemäss einem der vorangehenden Ansprüche, **dadurch gekennzeichnet, dass** es wenigstens ein Energiespeichermodul (400) zur Speicherung wenigstens eines Teils der von wenigstens einem generatorischen Bremsmodul (100) erzeugen elektrischen Energie aufweist, insbesondere dass es eine Leistungssteuerung umfasst, welche wenigstens einen Teil der im wenigstens einen Energiespeichermodul (400) gespeicherten elektrische Energie einem elektrischen Verbraucher (700) zur Verfügung stellt.

15. Das Bremssystem (1) gemäss einem der vorangehenden Ansprüche, **dadurch gekennzeichnet, dass** es eine Antriebssteuerung aufweist, welche elektrische Energie von einer Fahrleitung (610) und/oder von wenigstens einem Energiespeichermodul (500) wenigstens einem generatorischen Bremsmodul (100) zuführt, wobei das generatorische Bremsmodul (100) als Elektromotor wirkt und die elektrische Energie in Rotationsenergie umwandelt und auf die dem wenigsten einen generatorischen Bremsmodul (100) zugeordnete Radsatzwelle (13) überträgt.

16. Das Bremssystem (1) gemäss einem der vorangehenden Ansprüche, **dadurch gekennzeichnet, dass** es eine Dissipationsvorrichtung (500) umfasst, welche wenigstens einen Teil der von wenigstens einem generatorischen Bremsmodul (100) erzeugten elektrischen Energie in thermische Energie umwandelt, insbesondere dass die Dissipationsvorrichtung (500) eine thermische Masse umfasst, die wenigstens teilweise aus einem Material mit einer hohen spezifischen Wärmekapazität besteht.

17. Das Bremssystem (1) gemäss einem der vorangehenden Ansprüche, **dadurch gekennzeichnet, dass** das Bremssystem (1) eine in einem Schienenfahrzeug (10) angeordnete lokale Bremssteuerung aufweist, welche die Bremsleistung der generatorischen Bremsmodule (100) wenigstens dieses Schienenfahrzeugs (10) überwacht und bei Abweichung von einem Sollwert die Bremsleistung wenigstens eines generatorischen Bremsmoduls (100) anpasst.

18. Das Bremssystem (1) gemäss einem der vorangehenden Ansprüche, **dadurch gekennzeichnet, dass** sich das Bremssystem (1) über einen Verbund (50) mehrerer Schienenfahrzeuge (10) erstreckt, wobei wenigstens zwei Schienenfahrzeuge (10) ein generatorisches Bremsmodul (100) aufweisen, insbesondere dass das Bremssystem (1) eine globale Bremssteuerung umfasst, welche die Bremsleistung und/oder die Antriebsleistung der generatorischen Bremsmodule (100) einer Mehrzahl von mit dem Bremssystem (1) ausgestatteten Schienenfahrzeugen (10) überwacht und regelt.

19. Das Bremssystem (1) gemäss einem der vorangehenden Ansprüche, **dadurch gekennzeichnet, dass** das wenigstens eine generatorische Bremsmodul (100) eine Stator-Anordnung (110) und eine bezüglich der Stator-Anordnung relativ drehbare Rotor-Anordnung (120) aufweist.

20. Das Bremssystem (1) gemäss Anspruch 19, **dadurch gekennzeichnet, dass** die Rotor-Anordnung (120) so ausgebildet ist, dass sie auf einer Radsatzwelle (13) eines Schienenfahrzeugs (40) angebracht werden kann; und/oder dass die Stator-Anordnung (110) ein Befestigungsmittel (111) zur Befestigung an einem Drehgestell (30) und/oder einem Untergestell eines Schienenfahrzeugs (40) aufweist; und/oder dass das wenigstens eine Bremsmodul (100) ein wenigstens teilweise staub- und wasserdichtes Gehäuse (130) umfasst.

21. Das Bremssystem (1) gemäss einem der Ansprüche 19 bis 20, **dadurch gekennzeichnet, dass** die Rotor-Anordnung (120) so ausgebildet ist, dass sie rotatorisch mittelbar mit einer Radsatzwelle (13) eines Schienenfahrzeugs (40) verbunden werden kann, insbesondere über ein Getriebe, z.B. ein Planetengetriebe.

22. Ein Radsatz (10) umfassend ein erstes Rad (11) und ein zweites Rad (12), die mit einer Radsatzwelle (13)verbunden sind, wobei der Radsatzwelle (13) eine Mehrzahl K generatorischer Bremsmodule (100) zugeordnet sind, wobei es sich bei den generatorischen Bremsmodulen (100) um wenigstens zwei unterschiedliche Typen generatorischer Bremsmodule (100) handelt, die sich darin unterscheiden, dass ihre maximalen Wirkungsgrade bei unterschiedlichen Drehzahlen liegen.

23. Ein Vollbahn-Schienenfahrzeug (40) umfassend ein Bremssystem (1) gemäss einem der Ansprüche 1 bis 21.

24. Ein Verfahren zum Betreiben eines Vollbahn-Schienenfahrzeugs (40) mit einem Bremssystem (1) gemäss einem der vorangehenden Ansprüche,
a. das Schienenfahrzeug (40) umfassend eine Mehrzahl N von Radsätzen (10), wobei ein Radsatz (10) jeweils umfassend ein erstes Rad (11) und ein zweites Rad (12), die mit einer Radsatzwelle (13) verbunden sind,
b. das Bremssystem (1) umfassend wenigstens ein einer Radsatzwelle (13) zugeordnetes generatorisches Bremsmodul (100), das dazu eingerichtet ist Rotationsenergie der Radsatzwelle (13) in elektrische Energie umzuwandeln und dadurch das Schienenfahrzeug (40) abzubremsen, wobei
c. das Bremssystem mehrere unterschiedliche generatorische Bremsmodule aufweist, die jeweilsfür eine maximale Bremsleistung bei unterschiedlichen Fahrgeschwindigkeiten ausgelegt sind, und
d. dem wenigstens einen generatorischen Bremsmodul (100) wenigstens ein Energiespeichermodul (400) zur Speicherung von elektrischer Energie zugeordnet ist, wobei
e. während einem Bremsvorgang eine Bremssteuerung die aktuelle elektrische Bremsleistung des wenigstens einen generatorischen Bremsmoduls (100) und die aktuelle Speicherkapazität des wenigstens einen Energiespeichermoduls (400) ermittelt und
f. die Bremssteuerung in Abhängigkeit von der aktuellen elektrischen Bremsleistung des wenigstens einen generatorischen Bremsmoduls (100) und der aktuellen Speicherkapazität des wenigstens einen Energiespeichermoduls (400) dem Energiespeichermodul (400) einen ersten Teil der vom generatorischen Bremsmodul (100) erzeugten elektrischen Energie zuführt.

25. Das Verfahren gemäss Anspruch 24, wobei
a. die Bremssteuerung die aktuelle über eine dem wenigstens einen generatorischen Bremsmodul (100) zugeordnete Rückspeisungseinrichtung einem Bahnstromsystem zuführbare elektrischen Leistung ermittelt und
b. in Abhängigkeit davon sowie von der aktuellen elektrischen Bremsleistung des wenigstens einen generatorischen Bremsmoduls (100) und der aktuellen Speicherkapazität des wenigstens einen Energiespeichermoduls (400) der Rückspeisungseinrichtung einen zweiten Teil der von dem wenigstens einen generatorischen Bremsmodul (100) erzeugten elektrischen Energie zuführt.

26. Das Verfahren gemäss einem der Ansprüche 24 oder 25, wobei
a. die Bremssteuerung die aktuelle von wenigstens einer dem wenigstens einen generatorischen Bremsmodul (100) zugeordneten Dissipationsvorrichtung (500) aufnehmbare elektrische Leistung ermittelt und
b. in Abhängigkeit davon sowie in Abhängigkeit von der aktuellen elektrischen Bremsleistung des wenigstens einen generatorischen Bremsmoduls (100) und der aktuellen Speicherkapazität des wenigstens einen Energiespeichermoduls (400) und falls vorhanden der aktuell dem Bahnstromsystem zuführbaren elektrischen Leistung, der wenigstens einen Dissipationsvorrichtung (500) einen dritten Teil der vom generatorischen Bremsmodul (100) erzeugten elektrischen Energie zuführt.

27. Das Verfahren gemäss einem der Ansprüche 24 bis 26, wobei die Bremssteuerung die elektrische Bremsleistung mehrerer generatorischer Bremsmodule (100) ermittelt und bei einem Abfallen der elektrischen Bremsleistung eines generatorischen Bremsmoduls (100) den diesem zugeordneten Verbraucherwiderstand verändert.

28. Das Verfahren gemäss einem der Ansprüche 24 bis 27, **dadurch gekennzeichnet, dass** durch die Bremssteuerung die Bremsleistung mehrerer generatorischer Bremsmodule derart geregelt wird, dass die Bremsleistung wenigstens eines in Fahrtrichtung des Schienenfahrzeugs oder einer Komposition von Schienenfahrzeugen örtlich weiter vorne angeordneten generatorischer Bremsmoduls höher ist als die wenigstens eines weiter hinten angeordneten generatorischen Bremsmoduls.

## Claims

1. A braking system (1) for a rail vehicle, in particular for a mainline rail vehicle (40),
a. the rail vehicle (40) comprising a plurality N of wheel sets (10),
i. a wheel set (10) in each case comprising a first wheel (11) and a second wheel (12) connected to a wheel set shaft (13),
b. the braking system (1) comprising at least one regenerative braking module (100) associated with a wheel set shaft (13), which is configured for converting rotational energy of the wheel set shaft (13) into electrical energy and thereby braking the rail vehicle (40), **characterized in that**
c. the braking system has several different regenerative braking modules, each configured for maximum braking power at different driving speeds.

2. The braking system (1) according to claim 1, **characterized in that** a first regenerative braking module is configured for a high braking power in a high driving speed range and a second regenerative braking module is configured for a high braking power in a low driving speed range.

3. The braking system (1) according to claim 2, **characterized in that**, for this purpose, at least one regenerative braking module is also connected to the wheel set shaft by means of a gearbox or a transmission.

4. The braking system (1) according to one of the preceding claims, **characterized in that** the rail vehicle (40) is a wagon, preferably a passenger wagon or a freight wagon.

5. The braking system (1) according to one of the preceding claims, **characterized in that** a plurality K of regenerative braking modules (100) is assigned to at least one wheel set shaft (13), and **in that** the regenerative braking modules (100) are at least two different types of regenerative braking modules (100).

6. The braking system (1) according to claim 5, **characterized in that** the types of regenerative braking modules differ **in that** their maximum efficiencies are at different rotational speeds.

7. The braking system (1) according to one of the preceding claims, **characterized in that** at least one wheel set arranged further in the front has a larger number of regenerative braking modules than at least one wheel set arranged further in the back.

8. The braking system (1) according to one of the preceding claims, **characterized in that** at least one wheel set (10) comprises at least one disc brake (200) with a brake disc (210) arranged on the wheel set shaft (13) , in particular **in that** the at least one disc brake (200) has an electromechanical and/or a hydraulic actuator (225) for actuating a brake caliper (220).

9. The braking system (1) according to one of the preceding claims, **characterized in that** at least one regenerative braking module (100) is arranged essentially on a median plane (E) between the first and the second wheel (11, 12) of the associated wheel set (10) and is mechanically operatively connected to the corresponding wheel set shaft (13).

10. The braking system (1) according to one of the preceding claims, **characterized in that** at least one regenerative braking module (100) is arranged at a first distance Ai, wherein Ai>0, to a median plane (E) between the first and the second wheel (11, 12) of the associated wheel set (10) and is mechanically operatively connected to the corresponding wheel set shaft (13) , in particular **in that**, when the rail vehicle (40) is traveling straight ahead, the sum of first distances (Ai) of all regenerative braking modules (100) of the rail vehicle (40) from a vertical median plane (E) arranged equidistantly between the first and second wheels (11, 12) of the N wheel sets (10) is approximately equal to zero.

11. The braking system (1) according to one of the preceding claims, **characterized in that** the rail vehicle (40) has at least one bogie (30) comprising at least two wheel sets (10), of which at least one wheel set (10) has a regenerative braking module (100) , in particular **in that** at least one regenerative braking module (100) has a rotor arrangement (120) operatively connected mechanically to the wheel set shaft (13) assigned to it and a stator arrangement (120) operatively connected in a rotationally fixed manner to the bogie (300) assigned to it.

12. The braking system (1) according to one of the preceding claims, **characterized in that** it comprises an energy recovery device (600) for feeding at least part of the electrical energy generated by at least one regenerative braking module (100) into a traction line (610).

13. The braking system (1) according to one of the preceding claims, **characterized in that** it comprises a power control which makes at least part of the electrical energy generated by at least one regenerative braking module (100) available to an electrical consumer (700).

14. The braking system (1) according to one of the preceding claims, **characterized in that** it comprises at least one energy storage module (400) for storing at least part of the electrical energy generated by at least one regenerative braking module (100), in particular **in that** it comprises a power control which makes at least part of the electrical energy stored in the at least one energy storage module (400) available to an electrical consumer (700).

15. The braking system (1) according to one of the preceding claims, **characterized in that** it has a drive control which supplies electrical energy from a traction line (610) and/or from at least one energy storage module (500) to at least one regenerative braking module (100), the regenerative braking module (100) acting as an electric motor and converting the electrical energy into rotational energy and transmitting it to the wheel set shaft (13) assigned to the at least one regenerative braking module (100).

16. The braking system (1) according to one of the preceding claims, **characterized in that** it comprises a dissipation device (500) which converts at least part of the electrical energy generated by at least one regenerative braking module (100) into thermal energy, in particular **in that** the dissipation device (500) comprises a thermal mass which consists at least partly of a material with a high specific heat capacity.

17. The braking system (1) according to one of the preceding claims, **characterized in that** the braking system (1) has a local braking control system arranged in a rail vehicle (10), which monitors the braking power of the regenerative braking modules (100) of at least this rail vehicle (10) and adjusts the braking power of at least one regenerative braking module (100) in the event of deviation from a setpoint value.

18. The braking system (1) according to one of the preceding claims, **characterized in that** the braking system (1) extends over an assembly (50) of a plurality of rail vehicles (10), at least two rail vehicles (10) having a regenerative braking module (100) , in particular **in that** the braking system (1) comprises a global braking control system which monitors and regulates the braking power and/or the drive power of the regenerative braking modules (100) of a plurality of rail vehicles (10) equipped with the braking system (1).

19. The braking system (1) according to one of the preceding claims, **characterized in that** the at least one regenerative braking module (100) has a stator arrangement (110) and a rotor arrangement (120) which can rotate relative to the stator arrangement.

20. The braking system (1) according to claim 19, **characterized in that** the rotor arrangement (120) is designed such that it can be mounted on a wheel set shaft (13) of a rail vehicle (40); and/or **in that** the stator arrangement (110) comprises a fastening means (111) for fastening to a bogie (30) and/or an underframe of a rail vehicle (40); and/or **in that** the at least one braking module (100) comprises an at least partially dustproof and waterproof housing (130).

21. The braking system (1) according to one of Claims 19 to 20, **characterized in that** the rotor arrangement (120) is designed such that it can be indirectly connected rotationally to a wheel set shaft (13) of a rail vehicle (40), in particular via a gearbox, e.g. a planetary gearbox.

22. A wheel set (10) comprising a first wheel (11) and a second wheel (12), which are connected to a wheel set shaft (13), wherein a plurality of K regenerative braking modules (100) are associated with the wheel set shaft (13), wherein the regenerative braking modules (100) are at least two different types of regenerative braking modules (100), which differ in that their maximum efficiencies are at different rotational speeds.

23. A mainline rail vehicle (40) comprising a braking system (1) according to any one of Claims 1 to 21.

24. A method for operating a full-track rail vehicle (40) with a braking system (1) according to any of the preceding claims,
a. the rail vehicle (40) comprising a plurality N of wheel sets (10), a wheel set (10) in each case comprising a first wheel (11) and a second wheel (12) connected to a wheel set shaft (13),
b. the braking system (1) comprising at least one regenerative braking module (100) associated with a wheel set shaft (13), which is configured for converting rotational energy of the wheel set shaft (13) into electrical energy and thereby braking the rail vehicle (40), wherein
c. the braking system comprises several different regenerative braking modules, each configured for maximum braking power at different driving speeds, and
d. at least one energy storage module (400) for storing electrical energy is associated with the at least one regenerative braking module (100), wherein
e. during a braking process, a braking control system determines the current electrical braking power of the at least one regenerative braking module (100) and the current storage capacity of the at least one energy storage module (400), and
f. the braking control system supplies a first portion of the electrical energy generated by the regenerative braking module (100) to the energy storage module (400) depending on the current electrical braking power of the at least one regenerative braking module (100) and the current storage capacity of the at least one energy storage module (400).

25. The method according to Claim 24, wherein
a. the braking control system determines the current electrical power which can be supplied to a traction current system via an energy recovery device assigned to the at least one regenerative braking module (100), and
b. depending on this and on the current electrical braking power of the at least one regenerative braking module (100) and the current storage capacity of the at least one energy storage module (400), feeds a second part of the electrical energy generated by the at least one regenerative braking module (100) to the energy recovery device.

26. The method according to any one of Claims 24 or 25, wherein
a. the braking control system determines the current electrical power which can be absorbed by at least one dissipation device (500) associated with the at least one regenerative braking module (100), and
b. depending on this and depending on the current electrical braking power of the at least one regenerative braking module (100) and the current storage capacity of the at least one energy storage module (400) and, if present, the electrical power that can currently be supplied to the traction current system, supplies a third part of the electrical energy generated by the regenerative braking module (100) to the at least one dissipation device (500).

27. The method according to any one of Claims 24 to 26, wherein the braking control system determines the electrical braking power of a plurality of regenerative braking modules (100) and, in the event of a drop in the electrical braking power of a regenerative braking module (100), changes the load resistance assigned thereto.

28. The method according to one of Claims 24 to 27, **characterized in that** the braking control system regulates the braking power of a plurality of regenerative braking modules in such a way that the braking power of at least one regenerative braking module arranged locally further in the front in the direction of travel of the rail vehicle or of a composition of rail vehicles is higher than that of at least one regenerative braking module arranged further in the back.

## Revendications

1. Un système de freinage (1) pour un véhicule ferroviaire, en particulier pour un véhicule ferroviaire à voie pleine (40),
a. le véhicule ferroviaire (40) comprend une pluralité N d'essieux (10),
i. un essieu (10) comprenant chacun une première roue (11) et une deuxième roue (12) reliées à un arbre d'essieu (13),
b. le système de freinage (1) comprend au moins un module de freinage générateur (100) associé à un arbre d'essieu (13), qui est conçu pour convertir l'énergie de rotation de l'arbre d'essieu (13) en énergie électrique et freiner ainsi le véhicule ferroviaire (40), **caractérisé en ce que**
c. le système de freinage comprend plusieurs modules de freinage générateurs différents, chacun étant conçu pour une puissance de freinage maximale à différentes vitesses de déplacement.

2. Le système de freinage (1) selon la revendication 1, **caractérisé en ce qu'**un premier module de freinage générateur est conçu pour une puissance de freinage élevée dans une plage de vitesse de déplacement élevée et un deuxième module de freinage générateur est conçu pour une puissance de freinage élevée dans une plage de vitesse de déplacement faible.

3. Le système de freinage (1) selon la revendication 2, **caractérisé en ce qu'**à cet effet, au moins un module de freinage générateur est également relié à l'arbre d'essieu au moyen d'un engrenage ou d'une transmission.

4. Le système de freinage (1) selon l'une des revendications précédentes, **caractérisé en ce que** le véhicule ferroviaire (40) est un wagon, de préférence un wagon de voyageurs ou un wagon de marchandises.

5. Le système de freinage (1) selon l'une des revendications précédentes, **caractérisé en ce qu'**à au moins un arbre d'essieu (13) est associée une pluralité K de modules de freinage générateur (100), et **en ce que** les modules de freinage générateur (100) sont au moins deux types différents de modules de freinage générateur (100).

6. Le système de freinage (1) selon la revendication 5, **caractérisé en ce que** les types de modules de freinage générateur se distinguent **en ce que** leurs rendements maximaux se situent à des vitesses de rotation différentes.

7. Le système de freinage (1) selon l'une des revendications précédentes, **caractérisé en ce qu'**au moins un essieu disposé plus en avant dispose d'un plus grand nombre de modules de freinage générateur qu'au moins un essieu disposé plus en arrière.

8. Le système de freinage (1) selon l'une des revendications précédentes, **caractérisé en ce qu'**au moins un essieu (10) comprend au moins un frein à disque (200) avec un disque de frein (210) disposé sur l'arbre d'essieu (13), notamment **en ce que** le au moins un frein à disque (200) comprend un actionneur électromécanique et/ou un actionneur hydraulique (225) pour actionner un étrier de frein (220).

9. Le système de freinage (1) selon l'une des revendications précédentes, **caractérisé en ce qu'**au moins un module de freinage générateur (100) est disposé essentiellement sur un plan médian (E) entre la première et la deuxième roue (11, 12) de l'essieu (10) associé et est relié mécaniquement de manière fonctionnelle à l'arbre d'essieu (13) correspondant.

10. Le système de freinage (1) selon l'une quelconque des revendications précédentes, **caractérisé en ce qu'**au moins un module de freinage générateur (100) est situé à une première distance Ai, avec Ai>0, par rapport à un plan médian (E) entre la première et la deuxième roue (11, 12) de l'essieu (10) associé et est en liaison active mécanique avec l'arbre d'essieu (13) correspondant, en particulier **en ce que**, lorsque le véhicule ferroviaire (40) roule en ligne droite, la somme des premières distances (Ai) de tous les modules de freinage générateur (100) du véhicule ferroviaire (40) par rapport à un plan médian vertical (E) disposé à équidistance entre les première et deuxième roues (11, 12) des N essieux (10) est approximativement égale à zéro.

11. Le système de freinage (1) selon l'une des revendications précédentes, **caractérisé en ce que** le véhicule ferroviaire (40) comporte au moins un bogie (30) comprenant au moins deux essieux (10), dont au moins un essieu (10) comporte un module de freinage générateur (100), notamment **en ce qu'**au moins un module de freinage générateur (100) comporte un ensemble rotor (120) en liaison mécanique active avec l'arbre d'essieu (13) qui lui est associé, ainsi qu'un ensemble stator (120) en liaison solidaire en rotation avec le bogie (300) qui lui est associé.

12. Le système de freinage (1) selon l'une des revendications précédentes, **caractérisé en ce qu'**il comporte un dispositif de réinjection (600) pour injecter dans une ligne de contact (610) au moins une partie de l'énergie électrique générée par au moins un module de freinage générateur (100).

13. Le système de freinage (1) selon l'une des revendications précédentes, **caractérisé en ce qu'**il comprend une gestion de puissance qui met à disposition d'un consommateur électrique (700) au moins une partie de l'énergie électrique générée par au moins un module de freinage générateur (100).

14. Le système de freinage (1) selon l'une des revendications précédentes, **caractérisé en ce qu'**il comprend au moins un module de stockage d'énergie (400) pour stocker au moins une partie de l'énergie électrique produite par au moins un module de freinage générateur (100), notamment **en ce qu'**il comprend une gestion de puissance qui met à disposition d'un consommateur électrique (700) au moins une partie de l'énergie électrique stockée dans ledit au moins un module de stockage d'énergie (400).

15. Le système de freinage (1) selon l'une des revendications précédentes, **caractérisé en ce qu'**il comporte une commande d'entraînement qui fournit de l'énergie électrique à partir d'une ligne de contact (610) et/ou d'au moins un module de stockage d'énergie (500) à au moins un module de freinage générateur (100), le module de freinage générateur (100) agissant comme un moteur électrique et convertissant l'énergie électrique en énergie de rotation et la transmettant à l'arbre d'essieu (13) associé au moins à un module de freinage générateur (100).

16. Le système de freinage (1) selon l'une quelconque des revendications précédentes, **caractérisé en ce qu'**il comprend un dispositif de dissipation (500) qui transforme au moins une partie de l'énergie électrique générée par au moins un module de freinage générateur (100) en énergie thermique, notamment **en ce que** le dispositif de dissipation (500) comprend une masse thermique constituée au moins en partie d'un matériau ayant une capacité thermique spécifique élevée.

17. Le système de freinage (1) selon l'une des revendications précédentes, **caractérisé en ce que** le système de freinage (1) comporte une commande de freinage locale disposée dans un véhicule ferroviaire (10), qui surveille la puissance de freinage des modules de freinage générateurs (100) d'au moins ce véhicule ferroviaire (10) et qui adapte la puissance de freinage d'au moins un module de freinage générateur (100) en cas d'écart par rapport à une valeur de consigne.

18. Le système de freinage (1) selon l'une des revendications précédentes, **caractérisé en ce que** le système de freinage (1) s'étend sur un ensemble (50) de plusieurs véhicules ferroviaires (10), au moins deux véhicules ferroviaires (10) comprenant un module de freinage générateur (100) , en particulier **en ce que** le système de freinage (1) comprend une commande de freinage globale qui surveille et régule la puissance de freinage et/ou la puissance motrice des modules de freinage générateur (100) d'une pluralité de véhicules ferroviaires (10) équipés du système de freinage (1).

19. Un système de freinage (1) selon l'une quelconque des revendications précédentes, **caractérisé en ce que** ledit au moins un module de freinage générateur (100) comprend un ensemble stator (110) et un ensemble rotor (120) mobile en rotation relative par rapport à l'ensemble stator.

20. Le système de freinage (1) selon la revendication 19, **caractérisé en ce que** l'ensemble rotor (120) est adapté pour être monté sur un arbre d'essieu (13) d'un véhicule ferroviaire (40) ; et/ou **en ce que** l'ensemble stator (110) comprend un moyen de fixation (111) pour la fixation à un bogie (30) et/ou à un châssis d'un véhicule ferroviaire (40) ; et/ou **en ce que** ledit au moins un module de freinage (100) comprend un boîtier (130) au moins partiellement étanche à la poussière et à l'eau.

21. Le système de freinage (1) selon l'une des revendications 19 à 20, **caractérisé en ce que** l'ensemble rotor (120) est configuré pour être relié en rotation indirectement à un arbre d'essieu (13) d'un véhicule ferroviaire (40), notamment par l'intermédiaire d'un engrenage, par exemple un engrenage planétaire.

22. Un essieu (10) comprenant une première roue (11) et une deuxième roue (12) reliées à un arbre d'essieu (13), l'arbre d'essieu (13) étant associé à une pluralité de modules de freinage générateurs (100), les modules de freinage générateurs (100) étant au moins deux types différents de modules de freinage générateurs (100) qui diffèrent en ce que leurs rendements maximaux sont situés à des vitesses de rotation différentes.

23. Un véhicule ferroviaire tout terrain (40) comprenant un système de freinage (1) selon l'une quelconque des revendications 1 à 21.

24. Un procédé d'exploitation d'un véhicule ferroviaire à voie pleine (40) avec un système de freinage (1) selon l'une des revendications précédentes,
a. le véhicule ferroviaire (40) comprend une pluralité N d'essieux (10), un essieu (10) comprenant chacun une première roue (11) et une deuxième roue (12) reliées à un arbre d'essieu (13),
b. le système de freinage (1) comprend au moins un module de freinage générateur (100) associé à un arbre d'essieu (13), qui est conçu pour convertir l'énergie de rotation de l'arbre d'essieu (13) en énergie électrique et freiner ainsi le véhicule ferroviaire (40), dans lequel
c. le système de freinage comprend plusieurs modules de freinage générateurs différents, chacun étant conçu pour une puissance de freinage maximale à différentes vitesses de déplacement, et
d. au moins un module de freinage générateur (100) est associé au moins un module de stockage d'énergie (400) pour le stockage d'énergie électrique, où
e. pendant une opération de freinage, une commande de freinage détermine la puissance de freinage électrique actuelle de l'au moins un module de freinage générateur (100) et la capacité d'accumulation actuelle de l'au moins un module de stockage d'énergie (400), et
f. la commande de freinage fournit au module de stockage d'énergie (400) une première partie de l'énergie électrique générée par le module de freinage générateur (100) en fonction de la puissance de freinage électrique actuelle de l'au moins un module de freinage générateur (100) et de la capacité de stockage actuelle de l'au moins un module de stockage d'énergie (400).

25. Le procédé selon la revendication 24, dans lequel
a. la commande de freinage détermine la puissance électrique actuelle pouvant être amenée à un système de courant de traction par l'intermédiaire d'un dispositif de réinjection associé à l'au moins un module de freinage générateur (100) et
b. en fonction de cela ainsi que de la puissance de freinage électrique actuelle de l'au moins un module de freinage générateur (100) et de la capacité de stockage actuelle de l'au moins un module de stockage d'énergie (400), amène au dispositif de réinjection une deuxième partie de l'énergie électrique générée par l'au moins un module de freinage générateur (100).

26. Le procédé selon l'une des revendications 24 ou 25, dans lequel
a. la commande de freinage détermine la puissance électrique actuelle pouvant être absorbée par au moins un dispositif de dissipation (500) associé à l'au moins un module de freinage générateur (100) et
b. en fonction de cela ainsi qu'en fonction de la puissance de freinage électrique actuelle de l'au moins un module de freinage générateur (100) et de la capacité de stockage actuelle de l'au moins un module de stockage d'énergie (400) et, si elle existe, de la puissance électrique pouvant être amenée actuellement au système de courant de traction, à l'au moins un dispositif de dissipation (500) une troisième partie de l'énergie électrique générée par le module de freinage générateur (100).

27. Le procédé selon l'une des revendications 24 à 26, dans lequel la commande de freinage détermine la puissance de freinage électrique de plusieurs modules de freinage générateur (100) et, en cas de chute de la puissance de freinage électrique d'un module de freinage générateur (100), modifie la résistance d'utilisation qui lui est associée.

28. Le procédé selon l'une des revendications 24 à 27, **caractérisé en ce que** la commande de freinage régule la puissance de freinage de plusieurs modules de freinage générateurs de telle sorte que la puissance de freinage d'au moins un module de freinage générateur disposé localement plus en avant dans le sens de la marche du véhicule ferroviaire ou d'un ensemble de véhicules ferroviaires soit supérieure à celle d'au moins un module de freinage générateur disposé plus en arrière.
